# EUROPEAN PATENT APPLICATION

(11) **EP 4 811 177 A1**
(43) Date of publication of application: **23.09.2026**
(21) Application number: 26163827.4
(22) Date of filing: 11.03.2026
(51) Int. Cl.: G06F 18/2135, G06F 18/23211, G06F 18/23213

(54) **APPARATUS, METHOD AND PROGRAM FOR DETERMINING DIMENSION NUMBER IN A DIMENSIONALITY REDUCTION APPROACH**

(30) Priority: 18.03.2025 JP 2025043178
(71) Applicant: Yokogawa Electric Corporation, Musashino-shi, Tokyo 180-8750 (JP)
(72) Inventor: Akiyoshi, Ryutaro, Tokyo, 180-8750 (JP)
(74) Representative: Hoffmann Eitle

(57) **Abstract**

Provided is an apparatus comprising a processor, wherein the processor performs: performing an acquisition process by acquiring a first data group including a plurality of first feature vectors; a dimensionality reduction process of generating a plurality of second data groups each including a plurality of second feature vectors obtained by performing a dimensionality reduction on at least a part of the plurality of first feature vectors, the plurality of second data groups differing in a number of dimensions reduced; a first calculation process by calculating an evaluation value resulting from performing clustering on each of the plurality of second data groups; and a first determination process by determining a dimension number after a dimensionality reduction that should be applied to a first feature vector based on an evaluation value calculated for each of the plurality of second data groups.

## Description

### BACKGROUND

### 1. TECHNICAL FIELD

The present invention relates to an apparatus, a method and a program for determining a dimension number.

### 2. RELATED ART

In Patent document 1 to 3, "an image feature extraction may be performed for a microstructure image" (paragraph 0074 of Cited Document 1) or the like is described.

### RELATED ART DOCUMENTS

### Patent document

Patent Document 1: Japanese Patent Application Publication No. 2021-515586
Patent Document 2: Japanese Patent Application Publication No. 2002-528095
Patent Document 3: Japanese Patent Application Publication No. 2003-520567

### SUMMARY

(1) In the first aspect of the present invention, provided is an apparatus comprising a processor, wherein the processor performs: performing an acquisition process by acquiring a first data group including a plurality of first feature vectors; a dimensionality reduction process of generating a plurality of second data groups each including a plurality of second feature vectors obtained by performing a dimensionality reduction on at least a part of the plurality of first feature vectors, the plurality of second data groups differing in a number of dimensions reduced; a first calculation process by calculating an evaluation value resulting from performing clustering on each of the plurality of second data groups; and a first determination process by determining a dimension number after a dimensionality reduction that should be applied to a first feature vector based on an evaluation value calculated for each of the plurality of second data groups. Each of the first feature vector and the second feature vector may be a set of one or more feature quantities. The feature quantity may be a parameter indicating a shape, a texture, or an internal state of a subject as a target of a data group. In the first determination process, among calculated evaluation values, a dimension number corresponding to the largest evaluation value may be determined as a dimension number that should be applied.
(2) In the apparatus of the above-described (1), the processor may further perform: a clustering process by performing a plurality of clusterings, with different cluster quantities to be generated, for a second data group including a second feature vector with a dimension number determined by the first determination process among the plurality of second data groups; a second calculation process by calculating each of evaluation values that is an execution result obtained by performing the plurality of clusterings; and a second determination process by determining a cluster quantity of clustering that should be applied to a second data group based on an evaluation value calculated for each of the plurality of clusterings. In the second determination process, among calculated evaluation values, a cluster quantity corresponding to the largest evaluation value may be determined as a cluster quantity that should be applied.
(3) In the apparatus of the above-described (2), the processor may further perform a third calculation process by calculating a composition ratio of a number of elements for each cluster for the first data group from a result of clustering with a cluster quantity determined in the second determination process.
(4) In the apparatus of the above-described (3), the processor may further perform: a division process by dividing the plurality of first feature vectors into a part of a first feature vector as at least a part of the first feature vectors and another part of the first feature vectors; and a trigger process by triggering, when applying a dimension number and a cluster quantity determined by the first determination process and the second determination process, redetermining of the dimension number and the cluster quantity that should be applied based on a difference degree between a composition ratio for each cluster calculated by the third calculation process for a target indicated with the part of the first feature vectors and a composition ratio for each cluster calculated by the third calculation process for a target indicated with the another part of the first feature vectors.
(5) In the apparatus of the above-described (3) or (4), the apparatus further comprises a storage unit that stores a composition ratio for each cluster calculated by the third calculation process for a target indicated with the first data group, wherein the apparatus may: when another first data group is acquired by the acquisition process in a state in which a composition ratio for each cluster is stored in the storage unit, in the dimensionality reduction process, generate, from the another first data group, another second data group including a second feature vector of the dimension number determined by the first determination process; and in the clustering process, perform clustering of the cluster quantity determined by the second determination process for the another second data group, and wherein the processor further performs a determination process by determining a difference between a target indicated with the another first data group and a target indicated with the first data group, based on an approximation degree between a composition ratio for each cluster calculated by the third calculation process for a target indicated with the another first data group and a composition ratio for each cluster for the first data group.
(6) In the apparatus of the above-described (3) or (4), the apparatus further comprises a storage unit that stores a composition ratio for each cluster calculated by the third calculation process for a target indicated with each of a plurality of first data groups, wherein the apparatus may: when another first data group is acquired by the acquisition process in a state in which a composition ratio for each cluster is stored in the storage unit, in the dimensionality reduction process, generate, from the another first data group, another second data group including a second feature vector of the dimension number determined by the first determination process; and in the clustering process, perform clustering of the cluster quantity determined by the second determination process for the another second data group, and wherein the processor further perform a determination process by determining whether a target indicated with the another first data group corresponds to which of targets indicated with respective ones of the plurality of first data groups, based on a composition ratio for each cluster calculated by the third calculation process for the target indicated with the another first data group and a composition ratio for each of the plurality of first data groups.
(7) In the apparatus of the above-described (6), the storage unit may: further store information of a target indicated with the first data group in association with each of the plurality of first data groups; wherein the processor may further perform an output process by outputting information of the target determined by the determination process to be applicable for a target indicated with the another first data group among targets indicated with respective ones of the plurality of first data groups.
(8) In the apparatus of any of the above-described (1) to (7), the subject may be a cell or a microorganism.
(9) In the second aspect of the present invention, provided is a method comprising: performing an acquisition step by acquiring a first data group including a plurality of first feature vectors; a dimensionality reduction step by generating a plurality of second data groups each including a plurality of second feature vectors obtained by performing a dimensionality reduction on at least a part of the plurality of first feature vectors, the plurality of second data groups differing in a number of dimensions reduced; a first calculation step by calculating an evaluation value resulting from performing clustering on each of the plurality of second data groups; and a first determination step by determining a dimension number after a dimensionality reduction that should be applied to a first feature vector based on an evaluation value calculated for each of the plurality of second data groups.
(10) In the third aspect of the present invention, provided is a program that is executed by a computer to cause the computer to perform: an acquisition process by acquiring a first data group including a plurality of first feature vectors; a dimensionality reduction process by generating a plurality of second data groups each including a plurality of second feature vectors obtained by performing a dimensionality reduction on at least a part of the plurality of first feature vectors, the plurality of second data groups differing in a number of dimensions reduced; a first calculation process by calculating an evaluation value resulting from performing clustering on each of the plurality of second data groups; and a first determination process by determining a dimension number after a dimensionality reduction that should be applied to a first feature vector based on an evaluation value calculated for each of the plurality of second data groups.

The summary clause does not necessarily describe all necessary features of the embodiments of the present invention. In addition, the present invention may also be a sub-combination of the features described above.

### BRIEF DESCRIPTION OF THE DRAWINGS

Fig. 1 illustrates an apparatus 1 according to an embodiment.
Fig. 2 illustrates a first data group.
Fig. 3 illustrates an operation of the apparatus 1.
Fig. 4 illustrates an operation of the apparatus 1.
Fig. 5 illustrates a generation technique of a subject group.
Fig. 6 illustrates an imaging technique of the subject group.
Fig. 7 illustrates a relationship between a dimension number of a second data group and a silhouette score.
Fig. 8 illustrates a composition ratio data file 1211 of a determination model 121.
Fig. 9 illustrates the composition ratio for each cluster of a cell group generated under each condition.
Fig. 10 illustrates the composition ratio for each cluster of a cell group generated under each condition.
Fig. 11 illustrates the composition ratio for each cluster of a cell group generated under each condition.
Fig. 12 illustrates the composition ratio for each cluster of a cell group generated under each condition.
Fig. 13 illustrates the composition ratio for each cluster of a cell group generated under each condition.
Fig. 14 illustrates a tip shape of a subject.
Fig. 15 illustrates a hole shape of a subject.
Fig. 16 illustrates a ridge shape of a subject.
Fig. 17 illustrates a valley shape of a subject.
Fig. 18 illustrates an edge shape of a subject.
Fig. 19 illustrates a saddle shape of a subject.
Fig. 20 illustrates an apparatus 1A according to a modified example.
Fig. 21 illustrates an operation of the apparatus 1A.
Fig. 22 illustrates an example of a computer 1200 in which a plurality of aspects of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. Also, not all of the combinations of features described in the embodiments are essential to the solving means of the invention.

### (Apparatus 1)

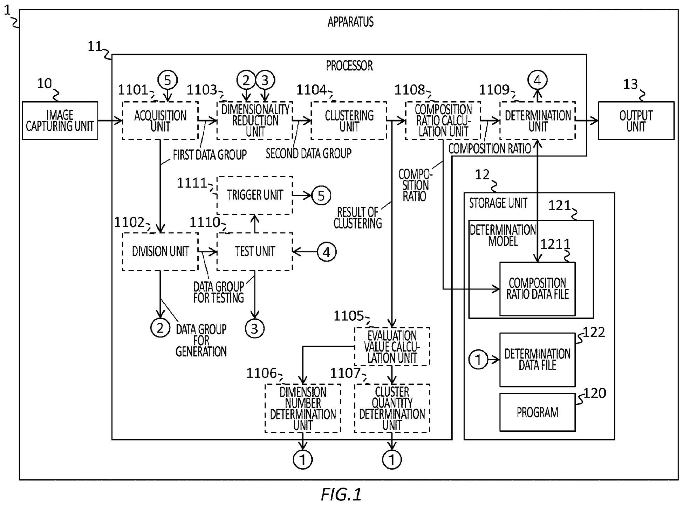

Fig. 1 illustrates an apparatus 1 according to the present embodiment. The apparatus 1 may generate a determination model 121 that determines the difference or classification of a target indicated with a data group, and comprises an image capturing unit 10, a processor 11, a storage unit 12, and an output unit 13.

### ((Image capturing unit 10))

The image capturing unit 10 captures a sample.

Herein, the sample may be distributed inside a cell or a microorganism as a subject. As an example, the sample may be a culture solution of the cell. The cell may be distributed in a two-dimensional plane, or may be distributed in a three-dimensional space. The cell may be a human-derived cell, or may be a cell of another organism. As an example, the cell may be an iPS cell (Induced pluripotent stem cell) for which a differentiation process is applied, and may include at least one of an undifferentiated cell or a differentiated cell. Note that a cell type is not limited thereto, and may be ES cell (Embryonic Stem Cell) or MS cell (mesenchymal stem cell), neural stem cell, hematopoietic stem cell, muscle stem cell, epithelial stem cell, ADS cell (Adipose-derived Stem cell, adipose derived stem cell), liver stem cell (Liver Stem cell), intestinal stem cell (Intestinal Stem cell), SS cell (Spermatogonial Stem cell, spermatogonia), lung stem cell (Lung Stem cell).

The image capturing unit 10 may capture a sample with a subject being in a nondestructive and non-staining state. That the subject is nondestructive may mean that a destruction process is not performed for each unit of the subject. That the subject is non-staining may mean that a staining process is not performed for each unit of the subject.

The image capturing unit 10 may have a microscope to enlarge and capture the subject. The microscope may be any type of microscope, such as a bright-field microscope, for example. The image capturing unit 10 may supply a captured image of a subject group to an acquisition unit 1101 described below.

### ((Storage unit 12))

The storage unit 12 stores a variety of information. The storage unit 12 according to the present embodiment may store a program 120, a determination model 121, and a determination data file 122.

### ((Program 120))

The program 120 causes the processor 11 to perform a variety of processes by being performed on the processor 11.

### (((Determination model 121)))

The determination model 121 is used for a determination performed by a determination unit 1109 described below. The determination model 121 according to the present embodiment may be generated by an instance-based learning, or may be used for a determination performed by k-Nearest Neighbor (in this embodiment, a nearest neighbor algorithm as an example). The determination model 121 may include a composition ratio data file 1211. While details will be described below, the composition ratio data file 1211 according to the present embodiment may store, for a target indicated with each of the plurality of data groups, composition ratio data according to a data quantity for each cluster obtained by clustering the data group.

### (((Determination data file 122)))

The determination data file 122 may store a dimension number and a cluster quantity determined by a dimension number determination unit 1106 and a cluster quantity determination unit 1107 described below.

### ((processor 11))

The processor 11 performs a variety of processes by executing the program 120 stored in the storage unit 12. The processor 11 may realize a functional unit that performs a variety of processes by executing the program 120. The processor 11 according to the present embodiment may realize an acquisition unit 1101, a division unit 1102, a dimensionality reduction unit 1103, a clustering unit 1104, an evaluation value calculation unit 1105, a dimension number determination unit 1106, a cluster quantity determination unit 1107, a composition ratio calculation unit 1108, a determination unit 1109, a test unit 1110, and a trigger unit 1111.

### (((Acquisition unit 1101)))

The acquisition unit 1101 acquires a first data group including a plurality of first feature vectors. The first feature vector may be a set of one or more feature quantities, or in the present embodiment, may be a set of values of a feature quantity about one subject, as an example. The acquisition unit 1101 may detect a subject in an image by analyzing one or more images supplied from the image capturing unit 10 or may specify a value of at least one feature quantity for each detected subject. The acquisition unit 1101 may acquire a first data group by generating, as data, a plurality of feature vectors including a value of the feature quantity for each subject as an element.

Herein, a target indicated with the first data group, or a data group for generation, a data group for testing, a second data group or the like described below may be a subject group, or may be a cell group as an example. Targets indicated with these data groups may belong to a separate classification depending on at least one of the type or state of the target. As an example, the target that is the cell group may belong to a different classification depending on whether the cell group is normal or abnormal, may belong to a different classification depending on a cell cycle of the cell group, may belong to a different classification depending on the gene to be express, may belong to a different classification depending on the expression level of a particular gene, may belong to a different classification depending on a generation amount of a particular protein, or may belong to a different classification depending on a differentiation state from an iPS cell or a hematopoietic stem cell (HPC).

The feature quantity may be a parameter indicating the shape, texture, internal state, or the like of the subject.

The feature quantity indicating the shape (also referred to as a feature quantity of shape) may include at least one of an area (µm²), a diameter (µm), a perimeter (µm), a circularity, a compactness, an asymmetry, boundary smoothness of cell boundary, a skeleton length, a ratio between a major axis and a minor axis, a backbone length, a branching number, or the number of branches. The diameter may be the longest length or the shortest length among straight lines passing through the center of the cell. The perimeter may be the length of the contour of the cell, and also referred to as the circumference length. The compactness may be an indicator indicating how clogged the internal structure (such as cytoplasm or nucleus) of the cell is, and is also referred to as Compactness. The asymmetry may be an indicator indicating how low the symmetry of the shape of the cell is. The boundary smoothness of cell boundary may be an indicator indicating how the shape of the a cell membrane is uniform, or whether an irregular deformation is not occurred on the cell membrane, and may be calculated from the Expression of Smoothness = (length of boundary of cell)² / 4π• area of cell). The skeleton length may be the length of a line passing through the center portion of the cell, or may be the length obtained by connecting the center lines of each branch portion when the cell is branched. The ratio between the major axis and the minor axis may be a ratio between a length of the cell in a major axis direction and a length in a minor axis direction, and also referred to as Anisometry. The branching number may be the number of branching points, and the number of branches may be the number of branches after branching.

The texture of the subject may be a print or pattern shown by the subject, or may be generated by the shape of the object to be captured in an image-capturing direction. The feature quantity indicating the texture of the subject (also referred to as a feature quantity of texture) may be the number of regions indicating a corresponding texture in the subject. The feature quantity of texture may include at least one type from, for example, the number of texture indicating a tip shape (Peak), the number of texture indicating a hole shape (Hole), the number of texture indicating a ridge shape (Ridge), the number of texture indicating a valley shape (Valley), the number of texture indicating an edge shape (Edge), the number of texture indicating a saddle shape (Saddle) or the like. For each texture, details will be described below.

The feature quantity indicating the internal state may include, when the subject is a cell or a microorganism, at least one of an area of a nucleus, a circularity of a nucleus, a ratio between a nucleus and a cytoplasm (also referred to as a Nuclear to Cytoplasmic Ratio, N/C ratio), granularity distribution in the subject (Granularity Distribution), or an orientation direction of the subject (Orientation direction). The N/C ratio may be a percentage occupied by a nucleus in the subject, and may be calculated from the Expression of N/C ratio = area of nucleus / (entire area of the subject - area of nucleus). The granularity distribution in the subject may be, when the subject is a cell, an indicator indicating at least one of an average µ_d or a distribution σ_d ² of the distribution of granule shaped structure existing inside the cytoplasm or inside the nucleus. The average µ_d of the distribution may be calculated by the Expression of µ_d = (1/N) Σd_i (note that "d_i" is the diameter of the ith particle, N is the particle quantity), and the distribution σ_d² of the distribution may be calculated by the Expression ofσ_d² = (1/N) Σ(d_i-µ_d)². The orientation direction of the subject may be an indicator indicating a direction in which the subject is aligned or extending. The orientation direction θ may be calculated by the Expression of θ = (1/2)tan⁻¹(2M_xy/(M_xx-M_yy). Herein, "M_xx", "M_yy", "M_xy" may be a second moment of the shape of the subject that is calculated by the Expression of M_xx = L(x-x*)², M_yy = Σ(y-y*)², M_xy = Σ(x-x*)(y-y*), and "x", "y" may be an x-coordinate and a y-coordinate on a contour of the subject, and "x*", "y*" may be a barycentric coordinate of the subject (that is, the center of the subject region). The orientation direction θ may be a direction of a first main component in which a principal component analysis is executed with the second moment as a covariance matrix. The orientation direction θ may indicate that, the subject is oriented in an x axis direction when it is near zero, the subject is oriented in a y axis direction when it is near ±90 degrees, and the subject is decompressed in a diagonal direction when it is ±45 degrees.

The feature quantity may indicate an amount according to a change over time in the state of the subject. For example, the feature quantity may indicate a change over time of a parameter indicating a shape, a texture, or an internal state of the subject, or the like, or may indicate an amount according to the periodicity of the change. In addition to or instead of this, the feature quantity may indicate at least one of a moving speed of the subject, a rotation speed, a moving direction, a moving pattern, an index value of collective migration, an index value of splitting of the subject, or an index value of fusing of the subjects. The moving direction may be used as a feature quantity in a state of direction vectors in an image, the direction vectors being, for example, a combination of a component in a vertical direction and a component in a horizontal direction. The moving pattern may be used as a feature quantity in a state in which there is a combination of moving directions of a subject at three or more time points. The evaluation value of collective migration may indicate the synchronicity or the linkage of a speed and a moving direction for a target subject relative to an ambient subject, in other words, the integrity of a collective movement, and as an example, may be an angle difference between a velocity vector of the target cell and an average velocity vector of a nearby cell, or may be an inner product between unit vectors obtained by normalizing these vectors. The index value of splitting or fusing of the subject may indicate an occurrence frequency of splitting or fusing for the target subject, or may be the number of occurrences, an occurrence rate, or an occurrence percentage per unit time, as an example. The index value of splitting or fusing of the subject may indicate the existence or absence of occurrence of the splitting or the fusing for the target subject. Note that the amount according to the change over time of the state of the subject may be calculated by analyzing a plurality of images (as an example, individual images obtained by time lapse photographing.

The acquisition unit 1101 may acquire a feature vector including a plurality of feature quantities in a state in which it is standardized in a common scale, when acquiring the feature vector including the plurality of feature quantities. For example, the acquisition unit 1101 may acquire a feature vector including a feature quantity that is standardized by standardizing each feature quantity to have an average value of 0 and a distribution of 1, in the plurality of feature vectors acquired. The acquisition unit 1101 may standardize each feature quantity by using the following Expression.

### Standardized feature quantity = (x-µ)/σ

Herein, "x" may be a value of a feature quantity before standardization, "µ" may be an average value of the feature quantity before standardization, and "σ" may be a standard deviation of the feature quantity before standardization.

The acquisition unit 1101 may supply the first data group to the division unit 1102 in a generating step of the determination model 121. Herein, the first data group in the generating step of the determination model 121, a classification of target indicated with the first data group may be known, and it is also referred to as a first data group of known targets. A tag (also referred to as a classification tag) indicating the classification of a target indicated with the first data group (in this embodiment, a subject group as an example) may be added to the first data group of the known target by a user operation or the like.

The acquisition unit 1101 may supply the first data group to the dimensionality reduction unit 1103 in an operation step of the determination model 121, that is, a step in which the generated determination model 121 is utilized. The first data group in the operation step of the determination model 121, a classification of target indicated with the first data group may be unknown, and it is also referred to as a first data group of unknown targets. The classification tag may not be added to the first data group of the unknown target.

### (((Division unit 1102)))

The division unit 1102 divides the first data group acquired by the acquisition unit 1101 into a part of the first feature vectors (also referred to as a data group for generation) and another part of the first feature vectors (also referred to as a data group for testing). The data group for generation may be a data group for generating the determination model 121, and the data group for testing may be a data group for testing the determination model 121. A classification tag of an original first data group may be added to each of the data group for generation and the data group for testing.

Herein, the first data group may include a first feature vector for each subject, and the division unit 1102 may divide a plurality of first feature vectors for a plurality of subjects in the first data group into a data group for generation that is first feature vectors about a part of the subjects and a data group for testing that is first feature vectors about another part of the subjects. As an example, the division unit 1102 may divide the plurality of first feature vectors about the plurality of subjects that is acquired from one or more images into the data group for generation and the data group for testing.

The division unit 1102 may perform division based on a position of the subject in the image, as an example, the division unit 1102 may divide the image into a first and second region, set a first feature vector of a subject group included in the first region as a data group for generation, set a first feature vector of the subject group included the second region as a data group for testing. Note that the division unit 1102 may perform division independently of the position of the subject in the image. The division unit 1102 may divide the first data group such that the data group for testing is less than the data group for generation. Note that the data group for generation is obtained by excluding the data group for testing from the first data group of the known target, and is generally statistically equivalent to the original first data group, and therefore it will also be referred to as the first data group of the known target in the description as appropriate.

The division unit 1102 may supply the data group for generation to the dimensionality reduction unit 1103. The division unit 1102 may supply the data group for testing to the test unit 1110.

### (((Dimensionality reduction unit 1103)))

The dimensionality reduction unit 1103 generates a second data group including a plurality of second feature vectors obtained by performing a dimensionality reduction for at least a part of the plurality of first feature vectors in the first data group. The dimensionality reduction unit 1103 may perform a dimensionality reduction by a conventionally well-known technique. In this embodiment, as an example, the dimensionality reduction unit 1103 may perform the dimensionality reduction by a technique of UMAP (Uniform Manifold Approximation and Projection). Note that the technique of the dimensionality reduction is not limited thereto, and may be another technique such as principal component analysis or t-SNE.

### =Generating step of determination model 121=

The dimensionality reduction unit 1103 may perform, in the generating step of the determination model 121, different processes according to whether or not an appropriate dimension number p after the dimensionality reduction is determined by a dimension number determination unit 1106 described below.

### ==Case in which dimension number is not determined==

When the dimension number p is not determined by the dimension number determination unit 1106, the dimensionality reduction unit 1103 may generate a plurality of second data groups differing in a number of dimensions reduced from at least a part of the first data group of the known target (in this embodiment, the data group for generation, as an example). The dimensionality reduction unit 1103 may generate a plurality of second data groups from the data group for generation that is common in the first data group of the known target.

Herein, in this embodiment, as an example, described is a case in which each of the plurality of first feature vectors in the first data group is N-dimensional (note that N is an integer of 2 or more), where the first data group is also referred to as "a first data group D₁^{(N)}", and the first feature vector is also referred to as a "first feature vector V₁^{(N)}", as needed. Note that in phrases such as the "first data group D₁^{(N)}" or the "first feature vector V₁^{(N)}", a subscript "1" indicates that the target is the first data group or the first feature vector, and a superscript "(N)" indicates a dimension number of the feature vector.

In this case, the dimensionality reduction unit 1103 may generate a second data group D₂^{(N-1)} including a plurality of second feature vectors V₂^{(N-1)} obtained by performing a one-dimensional dimensionality reduction for each of the plurality of first feature vectors V₁^{(N)} and a second data group D₂^{(N-2)} including a plurality of second feature vectors V₂^{(N-2)} obtained by performing a two-dimensional dimensionality reduction, respectively. Hereinafter, in a similar manner, the dimensionality reduction unit 1103 may respectively generate a second data group D₂^{(N-n)} including a second feature vector V₂^{(N-n)} obtained by performing a dimensionality reduction by each integer that meets n-dimensional (note that n is an integer, where 1≤n≤(N-1)) for each of the plurality of first feature vectors V₁^{(N)}.

The dimensionality reduction unit 1103 may supply, to the clustering unit 1104, each second data group D₂^{(N-n)} that is generated.

### ==Case in which dimension number is determined==

When the dimension number p is determined by the dimension number determination unit 1106, the dimensionality reduction unit 1103 may generate a second data group D₂^{(p)} of the dimension number p (also referred to as a second data group D₂^{(p)} of the known target) from at least a part of each of the first data group D₁^{(N)} of the known target (in this embodiment, the data group for generation, as an example). The dimensionality reduction unit 1103 may generate the second data group D₂^{(p)} from the data group for generation of each of the first data group D₁^{(N)}. The dimensionality reduction unit 1103 may supply, to the clustering unit 1104, the second data group D₂^{(p)} that is generated. To the second data group D₂^{(p)} of the known target, a classification tag of a first data group D₁^{(N)} from which it is derived may be added.

### =Operation step of determination model 121=

The dimensionality reduction unit 1103 may generate, in the operation step of the determination model 121, that is, in a step in which the determination model 121 is generated by storing a composition ratio for each cluster in the composition ratio data file 1211, in a similar manner to a case in which the dimension number is determined, the second data group D₂^{(p)} of the dimension number p (also referred to as the second data group D₂^{(p)} of the unknown target) from the first data group D₁^{(N)} of the unknown target. Therefore, when the first data group D₁^{(N)} of the unknown target is acquired by the acquisition unit 1101 in a state in which the composition ratio for each cluster is stored in the composition ratio data file 1211, the dimensionality reduction unit 1103 may generate the second data group D₂^{(p)} of the unknown target with the determined dimension number p from the first data group D₁^{(N)} of the unknown target. The dimensionality reduction unit 1103 may supply, to the clustering unit 1104, the second data group D₂^{(p)} of the unknown target that is generated. Note that the classification tag may not be added to the second data group D₂^{(p)} of the unknown target.

### (((Clustering unit 1104))

The clustering unit 1104 performs clustering on the second data group. The clustering unit 1104 may perform clustering by the k-means-clustering. Note that the technique of clustering is not limited thereto, and it may be another technique such as HDBSCAN, for example. The clustering unit 1104 may generate, as a result of the clustering, data obtained by associating each of the plurality of second feature vector with identification information of the cluster (also referred to as a cluster ID) that belongs to the second feature vector.

### =Generating step of determination model 121=

The clustering unit 1104 may perform, in the generating step of the determination model 121, different processes according to whether or not an appropriate dimension number p after the dimensionality reduction is determined by a dimension number determination unit 1106 described below and whether or not an appropriate cluster quantity q is determined by a cluster quantity determination unit 1107 described below.

### ==Case in which dimension number is not determined==

The clustering unit 1104 may perform, when the dimension number p is not determined by the dimension number determination unit 1106, clustering on the plurality of second feature vector V₂^{(N-n)} included in the second data group D₂^{(N-n)} for each of the second data group D₂^{(N-n)} of the known target with a separate dimension number. The cluster quantity may be set to be any number such as six in advance. The clustering unit 1104 may supply, to the evaluation value calculation unit 1105, a result of the clustering and the dimension number (N-n) of the second data group D₂^{(N-n)} from which the result is obtained, being associated with each other.

### ==Case in which dimension number is determined and cluster quantity is not determined==

When the dimension number p is determined by the dimension number determination unit 1106 and the cluster quantity q are not determined by the cluster quantity determination unit 1107, the clustering unit 1104 may perform clustering on the second data group D₂^{(p)} which includes the second feature vector V₂^{(p)} with the determined dimension number p from the second data group D₂^{(N-n)} of the plurality of known targets with separate dimension numbers. The clustering unit 1104 may perform the plurality of clusterings with different cluster quantity k to generate. As an example, the clustering unit 1104 may perform clustering with a cluster quantity k as a value of each of 2≤k≤K (note that K is a predetermined upper limit value). The clustering unit 1104 may supply a result of the clustering to the evaluation value calculation unit 1105.

### ==Case in which dimension number and cluster quantity are determined==

When the dimension number p is determined by the dimension number determination unit 1106 and the cluster quantity q are determined by the cluster quantity determination unit 1107, the clustering unit 1104 may perform may perform clustering with the determined cluster quantity q for the second data group D₂^{(p)} of the known target which includes the second feature vector V₂^{(p)} with the determined dimension number p. The clustering unit 1104 may supply a result of the clustering to the composition ratio calculation unit 1108. The clustering unit 1104 may supply, to the composition ratio calculation unit 1108, a result of the clustering and a classification tag that is added to the second data group D₂^{(p)} of the known target from which the result is obtained, being associated with each other.

### =Operation step of determination model 121=

In the operation step of the determination model 121, that is, in a step in which the determination model 121 is generated by storing a composition ratio for each cluster in the composition ratio data file 1211, in a similar manner to a case in which the dimension number p and the cluster quantity q are determined, the clustering unit 1104 may perform a clustering with the determined cluster quantity q for the second data group of the unknown target. Therefore, when the first data group of the unknown target is acquired by the acquisition unit 1101 in a state in which a composition ratio for each cluster is stored in the composition ratio data file 1211, the clustering unit 1104 may perform a clustering with the determined cluster quantity q for the second data group of the unknown target. The clustering unit 1104 may supply a result of the clustering to the composition ratio calculation unit 1108.

### (((Evaluation value calculation unit 1105)))

The evaluation value calculation unit 1105 calculates an evaluation value resulting from the clustering. The evaluation value resulting from the clustering may be a silhouette score indicated with the following Expression, as an example. The silhouette score may be calculated in a range of -1 to 1, and may indicate that the quality of the clustering is high, as it is closer to 1.$Silhouette score = \left(b-a\right) / max \left(a, b\right)$

Note that "a" may be a degree of aggregation within the cluster, and "b" may be a degree of separation between the clusters in the expression. "max(a,b)" may indicate a larger one from "a" or "b".

The evaluation value calculation unit 1105 according to the present embodiment may perform different processes according to whether or not an appropriate dimension number p after the dimensionality reduction is determined by a dimension number determination unit 1106 described below and whether or not an appropriate cluster quantity q is determined by a cluster quantity determination unit 1107 described below.

### =Case in which dimension number is not determined=

When the dimension number p is not determined by the dimension number determination unit 1106, the evaluation value calculation unit 1105 may calculate an evaluation value resulting from performing a clustering on each of the plurality of second data groups D₂^{(N-n)} of the known target with a separate dimension number. The evaluation value calculation unit 1105 may supply, to the dimension number determination unit 1106, the calculated evaluation value and the dimension number (N-n) of the second data group D₂^{(N-n)} of the known target from which the evaluation value is obtained, being associated with each other.

### =Case in which dimension number is determined and cluster quantity is not determined=

When the dimension number p is determined by the dimension number determination unit 1106 and the cluster quantity q is not determined by the cluster quantity determination unit 1107, the evaluation value calculation unit 1105 may calculate each evaluation value that is an execution result obtained by performing a plurality of clusterings differing in cluster quantities k for the second data group D₂^{(p)} of the known target of the dimension number p. The evaluation value calculation unit 1105 may supply, to the cluster quantity determination unit 1107, the calculated evaluation value and the cluster quantity k from which the evaluation value is obtained, being associated with each other.

### (((Dimension number determination unit 1106)))

The dimension number determination unit 1106 determines a dimension number p after the dimensionality reduction that should be applied to the first feature vector V₁^{(N)}, based on the evaluation value calculated for each of the plurality of second data groups D₂^{(N-n)} of the known target with a separate dimension number. The dimension number determination unit 1106 may determine, as a dimension number p after the dimensionality reduction that should be applied, the dimension number (N-n) associated with the largest evaluation value among the evaluation values supplied from the evaluation value calculation unit 1105. The dimension number determination unit 1106 may store the determined dimension number p in a determination data file 122 in a storage unit 12.

### (((Cluster quantity determination unit 1107)))

The cluster quantity determination unit 1107 determines a cluster quantity q of a clustering that should be applied to the second data group D₂^{(p)}, based on an evaluation value calculated for each of the plurality of clusterings performed with different cluster quantities k for the second data group D₂^{(p)} of the known target with the dimension number p. The cluster quantity determination unit 1107 may determine, as a cluster quantity q after the dimensionality reduction that should be applied, the cluster quantity k associated with the largest evaluation value among the evaluation values supplied from the evaluation value calculation unit 1105. The cluster quantity determination unit 1107 may store the determined cluster quantity q in a determination data file 122 in a storage unit 12.

### (((Composition ratio calculation unit 1108)))

The composition ratio calculation unit 1108 calculates, based on a result of the clustering with the cluster quantity q determined by the cluster quantity determination unit 1107**,** a composition ratio of the number of elements for each cluster for a first data group from which the result is derived. The element for each cluster may be a second feature vector, and may indicate a subject corresponding to the second feature vector, that is, a cell.

### =Generating step of determination model 121=

In the generating step of the determination model 121, the composition ratio calculation unit 1108 may calculate a composition ratio for each cluster from a clustering result supplied from the clustering unit 1104 that is associated with the classification tag, and store the calculated composition ratio and the classification tag being associated with each other in the composition ratio data file 1211 in the storage unit 12. In this manner, a composition ratio for each cluster that is calculated for a target indicated with each of the plurality of first data groups (in the present embodiment, a plurality of data groups for generation, as an example) of the known target is stored in the composition ratio data file 1211. By storing, in the composition ratio data file 1211, the composition ratio for each cluster in this manner, associating with the plurality of classification tags, an instance-based learning may be performed to generate the determination model 121. Note that, even if the generating step of the determination model 121 is performed, if the generated determination model 121 is tested, the composition ratio calculation unit 1108 may calculate the composition ratio for each of cluster for the first data group and supply it to the determination unit 1109. For the test of the determination model 121, details will be described below.

### =Operation step of determination model 121=

In the operation step of the determination model 121, the composition ratio calculation unit 1108 may calculate a composition ratio for each cluster for the second data group of the unknown target, or may supply the calculated composition ratio to the determination unit 1109**.**

### (((Determination unit 1109)))

The determination unit 1109 determines a classification of the target indicated with the first data group (in the present embodiment, a subject group, as an example) by using the determination model 121. The determination unit 1109 may determine, based on a composition ratio for each cluster calculated by the composition ratio calculation unit 1108 for the target indicated with the first data group of the unknown target and a composition ratio for each of the plurality of first data groups of the known target, which of the targets indicated with each of the plurality of first data groups of the known target corresponds to the target indicated with the first data group of the unknown target. The determination unit 1109 may perform determination by the k-Nearest Neighbor, and in this embodiment, may perform determination by a nearest neighbor algorithm, as an example. The determination unit 1109 may calculate, in the composition ratio data file 1211, a distance (Euclidean distance, as an example) between composition ratio data associated with each classification tag and composition ratio data for the first data group of the unknown target, and specify composition ratio data calculated to have the smallest distance among composition ratio data associated with each classification tag. The determination unit 1109 may determine a classification indicated with the classification tag associated with the identified composition ratio data as a classification of a target indicated with the first data group of the unknown target.

The determination unit 1109 may supply a determination result to the output unit 13. Note that when the determination model 121 is tested by a test unit 1110 described below, the determination unit 1109 may supply the determination result to the test unit 1110. The determination result may include identification information (also referred to as classification ID) of a classification to which the target indicated with the first data group of the unknown target belongs, as an example.

### (((Test unit 1110)))

The test unit 1110 performs a test on the determination model 121. the test unit 1110 according to the present embodiment may test the determination model 121 in the generating step of the determination model 121. The test unit 1110 may test the determination model 121 by using data included in the data group for testing. The test unit 1110 may store the data group for testing in the storage unit 12, and when performing the test, read the data group for testing from the storage unit 12 to use.

The test unit 1110 may supply the data group for testing to the dimensionality reduction unit 1103 as a first data group of an unknown target. In this way, the test unit 1110 may acquire a determination result, from the determination unit 1109, by causing a dimensionality reduction on a dimension number p by the dimensionality reduction unit 1103, clustering with a cluster quantity q by the clustering unit 1104, calculation of a composition ratio for each cluster by the composition ratio calculation unit 1108, and determination by the determination unit 1109 to be performed. The test unit 1110 may determine pass or failure of the test based on whether or not the classification of the classification tag that is added to the data group for testing and the classification indicated with the determination result match. The test unit 1110 may supply a result of the test to the trigger unit 1111.

The trigger unit 1111 triggers the regenerating of the determination model 121 based on the pass or failure of the test performed by the test unit 1110. The trigger unit 1111 may trigger the regenerating of the determination model 121 based on the result of the test on the determination model 121 performed by the test unit 1110. In this embodiment, as an example, in response to a failure of the result of the test, the trigger unit 1111 may cause the acquisition unit 1101, the dimensionality reduction unit 1103, the clustering unit 1104, the evaluation value calculation unit 1105, the dimension number determination unit 1106, the cluster quantity determination unit 1107, and the composition ratio calculation unit 1108 to perform a process again, from the determination of the dimension number p and the cluster quantity q to the generation of the determination model 121.

### ((Output unit 13))

The output unit 13 outputs a variety of information. The output unit 13 may display the information, and may transmit the information to an external apparatus, but the aspect of output is not limited thereto. The output unit 13 according to the present embodiment may output a determination result obtained by the determination unit 1109.

According to the apparatus 1 described above, a plurality of second data groups including a plurality of second feature vectors differing in a number of dimensions obtained by performing a dimensionality reduction on at least a part of the plurality of first feature vectors are generated, and a dimension number p after the dimensionality reduction that should be applied to the first feature vector is determined based on a silhouette score resulting from performing clustering on each of the plurality of second data groups. Therefore, since the result of clustering can be improved by performing the dimensionality reduction on the determined dimension number p by the first feature vector, a preferred dimension number can be compared to that of a case of searching each time, to perform clustering with high precision while reducing the load of the process.

In addition, a plurality of clusterings are performed with different cluster quantities for a second data group including a second feature vector of the determined dimension number p among the plurality of second data groups, and a cluster quantity q of clustering that should be applied to the second data group is determined based on an evaluation value calculated for each of the plurality of clusterings. Therefore, since the result of clustering can be improved by clustering the second data group for the determined cluster quantity q, a preferred cluster quantity can be compared to that of a case of searching each time, to perform clustering with high precision while reducing the load of the process.

In addition, a composition ratio for each cluster for the first data group is calculated from a result of the clustering with the determined cluster quantity q. Therefore, since a composition ratio for each cluster in a case in which the clustering is performed in a good condition for the first data group of the known target can be acquired, a difference between a target indicated with the first data group of the known target and an unknown target indicated with the first data group of the unknown target can be determined by comparing composition ratio for each cluster for the first data group of the unknown target.

In addition, based on a composition ratio for each cluster calculated for the target indicated with the first data group of the unknown target and a composition ratio that is stored for each of the plurality of first data groups of the known targets, which of the targets indicated with each of the plurality of first data groups of the known target corresponds to the target indicated with the first data group of the unknown target is determined. Therefore, which of the targets indicated with the plurality of first data groups of the known target corresponds to the unknown target indicated with the first data group of the unknown target can be determined.

In addition, since the subject is a cell or a microorganism, a clustering can be performed with high precision for the cell or the microorganism.

### (First data group)

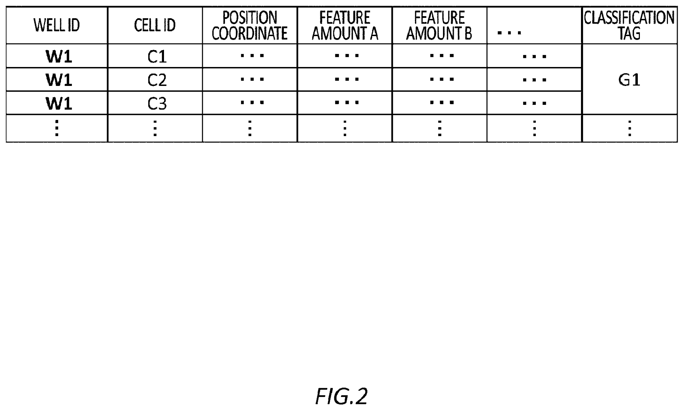

Fig. 2 illustrates a first data group. The first data group may include, for each cell as a target, identification information of a well in which the cell is cultured, identification information of the cell, a position of the cell in an image, and a feature vector of a value of each feature quantity. Note that a classification tag indicating a classification is added to the first data group of the present illustration.

### (Operation)

### ((Generation of determination model 121))

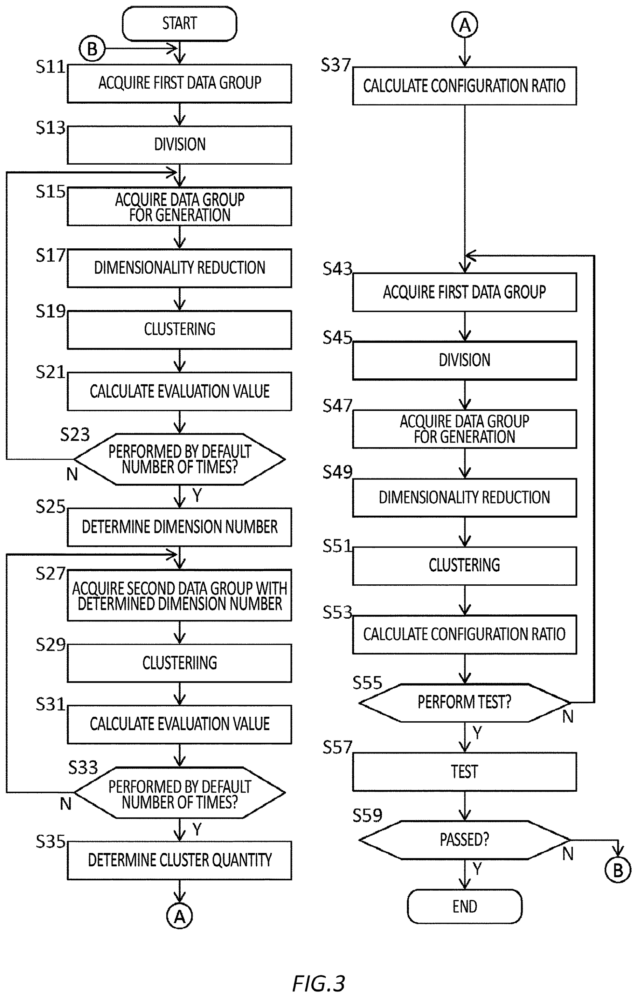

Fig. 3 illustrates an operation of the apparatus 1. The apparatus 1 generates the determination model 121 by performing processes of steps S11 to S59.

In step S11, the acquisition unit 1101 acquires a first data group D₁^{(N)}. The acquisition unit 1101 may acquire the first data group D₁^{(N)} of a known target to which the classification tag is added.

In step S13, the division unit 1102 divides the first data group into a data group for generation and a data group for testing.

In step S15, the dimensionality reduction unit 1103 acquires the data group for generation generated in step S13. Herein, a process of step S15 may be performed multiple times via step S23 described below, and in the process of each time of step S15, the dimensionality reduction unit 1103 may acquire the data group for generation of the first data group D₁^{(N)} that is common. As an example, the dimensionality reduction unit 1103 may temporarily save the data group for generation of the first data group D₁^{(N)} in the storage unit 12 in step S15, and in the second or later time of step S15, may read the data group for generation of the first data group D₁^{(N)} that is temporarily saved from the storage unit 12.

In step S17, the dimensionality reduction unit 1103 generates a second data group D₂^{(N-n)} including a plurality of second feature vectors V₂^{(N-n)} obtained by performing a dimensionality reduction for a plurality of first feature vectors V₁^{(N)} in the data group for generation of the first data group D₁^{(N)}. Herein, processes from step S15 to S17 may be performed multiple times via step S23 described below, and the dimensionality reduction unit 1103 may perform, in a process of step S17 each time, for a common data group for generation, a dimensionality reduction differing in dimension numbers n reduced from each other. As an example, the dimensionality reduction unit 1103 may sequentially increment the value of the dimension number n from 1 to (N-1) each time the process of step S17 is performed. In this manner, the dimensionality reduction unit 1103 may generate the second data group D₂^{(N-n)} of the plurality of known targets differing in dimension numbers n reduced. The dimensionality reduction unit 1103 may temporarily save, in the storage unit 12, the second data group D₂^{(N-n)} of the plurality of known targets generated for each dimensionality n.

In step S19, the clustering unit 1104 performs clustering on each of the plurality of second data groups D₂^{(N-n)} that are generated. The clustering unit 1104 may perform clustering of a cluster quantity that is set to be any number (as an example, 6) in advance. The clustering unit 1104 may perform clustering on the plurality of second feature vector V₂^{(N-n)} included in the second data group D₂^{(N-n)} of the known target generated in the process of the most recent step S17. In this manner, as a result of repeating the processes from step S15 to S19 via a process of step S23 described below, the clustering unit 1104 may perform clustering on the plurality of second feature vectors V₂^{(N-n)} included in the second data group D₂^{(N-n)}, for each second data group D₂^{(N-n)} of the known target of the separate dimension number.

In step S21, the evaluation value calculation unit 1105 calculates an evaluation value resulting from performing clustering on the second data group D₂^{(N-n)}. The evaluation value calculation unit 1105 may calculate a silhouette score resulting from clustering that is performed in the most recent step S19. In this manner, as a result of repeating the processes from step S15 to S21 via a process of step S23 described below, the evaluation value calculation unit 1105 may calculate a silhouette score resulting from performing the clustering on each of the second data group D₂^{(N-n)} of the plurality of known target differing in a number of dimensions from each other.

In step S23, the dimension number determination unit 1106 determines whether or not the processes from steps S15 to S21 are performed by a default number of times. In this embodiment, as an example, the default number of times may be a number of times obtained by subtracting 1 from the dimension number N of the feature vector V₁^{(N)} in the first data group D₁^{(N)}. When it is determined that the process is not performed by the default number of times (step S23; No), the process may transfer to step S15 described above. When it is determined that the process is performed a default number of times (step S23; Yes), the process may transfer to step S25.

In step S25, the dimension number determination unit 1106 determines a dimension number p after the dimensionality reduction that should be applied to the first feature vector V₁^{(N)}, based on the silhouette score calculated for each of the plurality of second data groups D₂^{(N-n)}. The dimension number determination unit 1106 may determine a dimension number (N-n) corresponding to the largest silhouette score calculated in step S21 as a dimension number p after the dimensionality reduction that should be applied.

In step S27, the clustering unit 1104 acquires, from the storage unit 12, a second data group D₂^{(p)} of the known target with the dimension number p among the second data groups D₂^{(N-n)} of the known target of each dimensionality n temporarily saved in step S17. The clustering unit 1104 may delete a second data group D₂^{(N-n)} of another dimension number from the storage unit 12.

In step S29, the clustering unit 1104 performs clustering on the second data group D₂^{(p)} with the dimension number p acquired in step S27. Herein, the process of step S29 may be performed multiple times via step S33 described below, and the clustering unit 1104 may have a cluster quantity k different from each other in the process of step S29 each time. As an example, the dimensionality reduction unit 1103 may sequentially increment the value of the cluster quantity k from 2 to an upper limit value K for each time the process of step S29 is performed. In this manner, the clustering unit 1104 may perform a plurality of clusterings each with a different cluster quantity k to generate. The clustering unit 1104 may temporarily save a result of the clustering of each cluster quantity k in the storage unit 12.

In step S31, the evaluation value calculation unit 1105 calculates an evaluation value resulting from performing clustering on the second data group D₂^{(p)}. The evaluation value calculation unit 1105 may calculate a silhouette score resulting from clustering that is performed in the most recent step S29. In this manner, as a result of repeating the processes of steps S27 to S31 via a process of step S33 described below, the evaluation value calculation unit 1105 may respectively calculate a silhouette score that is an execution result obtained by performing the plurality of clusterings differing in cluster quantities k for the second data group D₂^{(p)} of the known target with the dimension number p.

In step S33, the cluster quantity determination unit 1107 determines whether or not the processes from steps S27 to S31 are performed by a default number of times. In this embodiment, as an example, the default number of times may be the number of times obtained by subtracting 1 from the upper limit value K of the cluster quantity k. When it is determined that the process is not performed by the default number of times (step S33; No), the process may transfer to step S27 described above. When it is determined that the process is performed a default number of times (step S33; Yes), the process may transfer to step S35.

In step S35, the cluster quantity determination unit 1107 determines a cluster quantity q of a clustering that should be applied to the second data group D₂^{(p)}, based on the silhouette score calculated for each of the plurality of clusterings performed with different cluster quantities k for the second data group D₂^{(p)} of the known target with the dimension number p. The cluster quantity determination unit 1107 may determine a cluster quantity k associated with the largest silhouette score calculated in step S31 as a cluster quantity q that should be applied.

In step S37, the composition ratio calculation unit 1108 calculates, from a result of the clustering with the cluster quantity q determined by step S35, a composition ratio of the number of elements for each cluster. The composition ratio calculation unit 1108 may acquire, from the storage unit 12, a result of clustering with the cluster quantity q among the results of clusterings with each of cluster quantities k temporarily saved in step S29, and calculate a composition ratio. The composition ratio calculation unit 1108 may store, in the composition ratio data file 1211, the calculated composition ratio associated with the classification tag of the first data group from which the result is derived, that is, the classification tag that has been added to the first data group acquired in step S11. The composition ratio calculation unit 1108 may delete a result of a clustering of another cluster quantity from the storage unit 12.

In step S43, the acquisition unit 1101 acquires a new first data group D₁^{(N)}. The acquisition unit 1101 may acquire the first data group of the known target. Note that the first data group acquired in step S43 may be different from the first data group acquired in step S11. In addition, step S43 may be performed multiple times via step S55 described below, and the first data group acquired in step S43 each time may be different from the first data group acquired from step S43 of another time.

In step S45, the division unit 1102 divides the first data group acquired in the most recent step S43 into a data group for generation and a data group for testing. Note that a ratio of division may be the same as that of step S13. In addition, step S45 may be performed multiple times via step S55 described below, and the division ratio each time may be the same.

In step S47, the dimensionality reduction unit 1103 acquires the data group for generation generated in the most recent step S45. Herein, the processes from step S43 to S47 may be performed multiple times via step S55 described below, and the data group for generation acquired in the process of step S47 each time may be different from each other.

In step S49, the dimensionality reduction unit 1103 performs a dimensionality reduction for each first feature vector V₁^{(N)} of the data group for generation of the first data group D₁^{(N)} acquired in the most recent step S47, and generates a second data group D₂^{(p)} including a second feature vector V₂^{(p)} with the dimension number p.

In step S51, the clustering unit 1104 performs clustering with a cluster quantity q for the second data group D₂^{(p)} generated in the most recent step S49.

In step S53, the composition ratio calculation unit 1108 calculates, from a result of the clustering in the most recent step S51, a composition ratio of the number of elements for each cluster. The composition ratio calculation unit 1108 may store, in the composition ratio data file 1211, the calculated composition ratio associated with the classification tag of the first data group from which the result is derived, that is, the classification tag that has been added to the first data group acquired in the most recent step S43.

In step S55, the test unit 1110 determines whether or not the test of the determination model 121 is performed. The test unit 1110 may determine that the test will be performed in response to the user operation for performing the test is performed. The test unit 1110 may determine that the test will be performed in response to a predetermined test start condition being met. The test start condition may be that a composition ratio for the first data group of a reference number is stored in the composition ratio data file 1211, or may be that a composition ratio for a predetermined plurality of classifications is stored.

When it is determined that the test is not performed (step S55; No), the process may transfer to step S43. When it is determined that the test is performed (step S55; Yes), the process may transfer to step S57.

In step S57, the test unit 1110 tests the determination model 121 by using one or more data groups for testing stored in the storage unit 12. The test unit 1110 may supply, to the dimensionality reduction unit 1103, a data group for testing as the first data group of the unknown target, and acquire a determination result, by causing a dimensionality reduction on a dimension number p by the dimensionality reduction unit 1103, clustering with a cluster quantity q by the clustering unit 1104, calculation of a composition ratio for each cluster by the composition ratio calculation unit 1108, and determination by the determination unit 1109 to be performed. The test unit 1110 may acquire the classification of the classification tag added to the data group for testing and a result of correctness or error for each of the one or more data groups for testing, in which a correct answer is obtained when a classification indicated with a determination result matches and an incorrect answer is obtained when it does not matches. The test unit 1110 may determine pass or failure of the test based on the result of the correctness or error that is acquired.

As an example, the test unit 1110 may calculate at least one of precision, recall, F1 score, or accuracy for any classification of the data group for testing, and may determine the pass or failure of the test of the determination model 121 based on the calculation result. The test unit 1110 may determine the pass or failure of the test of the determination model 121 based on a macro average or a weighting average of the precision, the recall rate, the F1 score, or the accuracy for each classification of the data group for testing.

In step S59, the trigger unit 1111 determines whether or not the test of the determination model 121 was passed. When it is determined that the test was passed (step S59; Yes), the operation may end. When it is determined that the test was failed (step S59; No), the trigger unit 1111 may transfer the process to step S11. In this manner, the regenerating of the determination model 121 is triggered. Note that in the process of step S11 performed again, a first data group different from the process of step S11 last time may be acquired. When the process of step S11 is performed again, the composition ratio data stored in the composition ratio data file 1211 may be deleted.

### ((Operation of determination model 121))

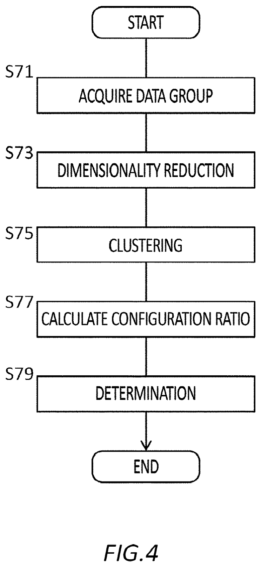

Fig. 4 illustrates an operation of the apparatus 1. By performing the processes of step 71 to S79, the apparatus 1 performs a determination for a target of the first data group of the unknown target by using the determination model 121.

In step S71, the acquisition unit 1101 acquires a first data group D₁^{(N)}. The acquisition unit 1101 may acquire the first data group D₁^{(N)} of an unknown target to which the classification tag is not added.

In step S73, the dimensionality reduction unit 1103 generates a second data group D₂^{(p)} with a dimension number p from the first data group D₁^{(N)} of the unknown target acquired in step S71.

In step S75, the clustering unit 1104 performs clustering with a cluster quantity q for the second data group generated in step S73.

In step S77, the composition ratio calculation unit 1108 calculates, from the result of the clustering in step S75, a composition ratio for each clustering.

In step S79, the determination unit 1109 determines a classification of a target (in the present embodiment, a subject group, as an example) indicated with the first data group of the unknown target acquired in step S71. The determination unit 1109 may determine, based on a composition ratio for each cluster calculated in step S77 for the target indicated with the first data group of the unknown target and a composition ratio for each of the plurality of first data groups of the known target in the determination model 121, which of the targets indicated with each of the plurality of first data groups of the known target corresponds to the target indicated with the first data group of the unknown target. The determination unit 1109 may output a determination result from the output unit 13.

### (Operation example)

### ((Preparing subject group))

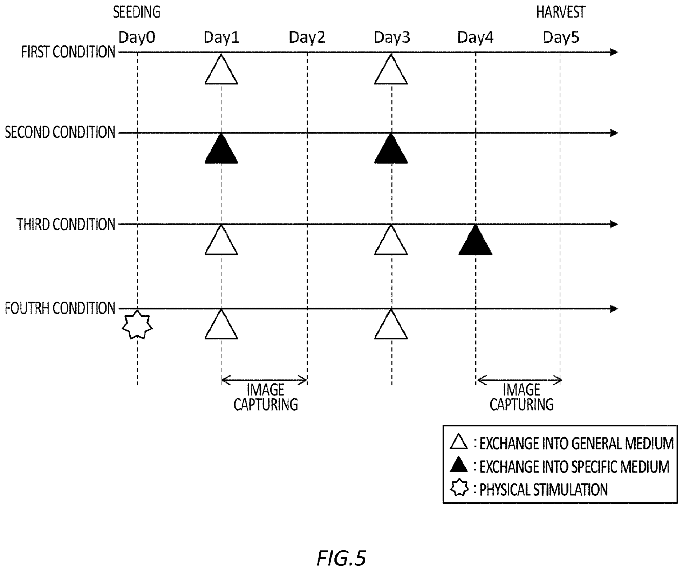

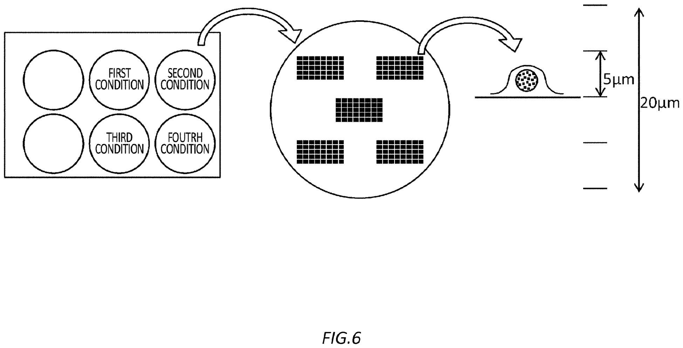

Fig. 5 illustrates a generation technique of a subject group. In the present exemplary operation, an iPS cell (201B7 strain) that is a subject is cultured in each of the first condition to the fourth condition below. The culturing was performed in separate wells in the same well plate (refer to Fig. 6 described below). Note that in the present exemplary operation, a classification of a cell group varies depending on the culture condition.

### (((First condition)))

The culturing was performed for five days by using a general maintenance culture method of an iPS cell. Note that on the first day and the third day, an exchange into a general medium was performed.

### (((Second condition)))

The culturing was performed in a similar manner to the first condition except that the culturing was performed in an undernutrition state after the inactivation medium was exchanged on the first day and the third day. As the inactivation medium, StemFit (registered trademark) medium that was subjected to a heat treatment for 30 minutes at 56 degrees Celsius was used.

### (((Third condition)))

The culturing was performed in a similar manner to the first condition except that the differentiation facilitating medium was exchanged on the fourth day. As the differentiation facilitating medium, a Dulbecco's Modified Eagle's Medium including 10% Fetal Bovine Serum, 1% non-essential amino acid for minimum essential medium, and 1% GlutaMax was used.

### (((Fourth condition)))

The culturing was performed in a similar manner to the first condition except that pipetting was performed 20 times to physically stimulate the cell fluid to be seeded.

### ((Image-capturing))

Fig. 6 illustrates an imaging technique of the subject group. In the present exemplary operation, cell groups of the culturing in each condition on the first day to the second day and the fourth day to the fifth day were captured using a microscope. The image-capturing was performed 20 times with intervals of 1 hour.

The image capturing was performed, using the "image cytometer CellVoyager CQ-1" (Yokogawa Electric Corp.) with a 20-fold high numerical aperture objective lens attached thereto, for 200 image-capturing regions in total within a well (a black rectangular region in the figure). In each image-capturing region, five images were captured by moving the focal plane by 5 µm in a height direction (also referred to as a z axis direction). By using image analysis software "CellPathfinder" (Yokogawa Electric Corp.), a bright-field image obtained by highlighting the contrast from image data of five images for each image-capturing region was generated. Note that in the right part in the figure, an example of the relationship between the height of the cell on the well plate and the interval of the focal plane is shown.

### ((Acquiring data group))

With respect to the acquired image, a first feature vector was generated by performing an image recognition on the individual cells by using DeepAreaFinder function of the "CellPathfinder" (Yokogawa Electric Corp.) and calculating a feature quantity of feature quantity and texture of the shape for each cell. Four first data groups were generated each with a target of cell group of separate classification by gathering the generated first feature vectors for each culturing condition.

Note that area (µm²), diameter (µm), perimeter (µm), circularity, compactness, asymmetry, skeleton length, branching number, and the number of branches were used as the feature quantity of the shape. As the feature quantity of the texture, the number of Peak, the number of Hole, the number of Ridge, the number of Valley, the number of Edge, and the number of Saddle were used.

### ((Determination of dimension number p))

A dimensionality reduction was performed for the first data group for the cell group cultured in any condition (for example, a first condition) and a second data group D₂⁽²⁾ to a second data group D₂⁽¹⁰⁾ were respectively generated. For each of these second data group D₂⁽²⁾ to second data group D₂⁽¹⁰⁾, a silhouette score was calculated by performing clustering with a cluster quantity of 3.

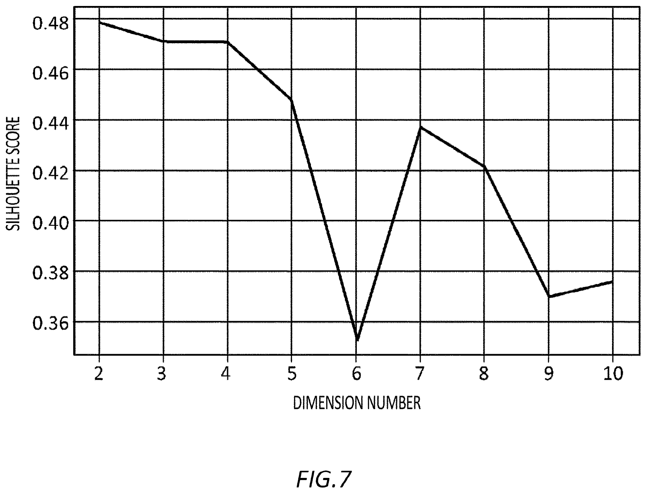

Fig. 7 illustrates a relationship between a dimension number of a second data group and a silhouette score. As shown in this figure, in the present exemplary operation, the silhouette score is the greatest when the dimension number of the second data group is 2, and therefore, the dimension number p is determined to be 2.

### ((Determining cluster quantity q))

A silhouette score was calculated by performing a plurality of clusterings with different cluster quantities for the second data group D₂⁽²⁾. In the present exemplary operation, the silhouette score is the greatest when the cluster quantity is 7, and therefore, the cluster quantity q was determined to be 7.

### ((Generating determination model 121))

A composition ratio for each cluster is calculated by performing clustering of the cluster quantity 7 after generating the second data group D₂⁽²⁾ of the dimension number 2 from the first data group having a cell group of each classification generated in a separate condition as a target. In this manner, a composition ratio data file 1211 of the determination model 121 is generated.

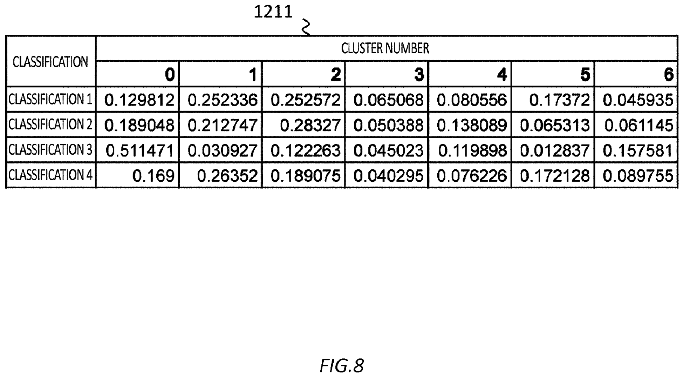

Fig. 8 illustrates a composition ratio data file 1211 of a determination model 121. In the composition ratio data file 1211 of the present illustration, for example, in a cell group of a classification 1, it is indicated that a ratio of cluster of the cluster number 0 is 0.129812, a ratio of cluster of the cluster number 1 is 0.252336, a ratio of cluster of the cluster number 2 is 0.252572, a ratio of cluster of the cluster number 3 is 0.065068, a ratio of cluster of the cluster number 4 is 0.080556, a ratio of cluster of the cluster number 5 is 0.17372, and a ratio of cluster of the cluster number 6 is 0.045935. Such respective composition ratio data is stored associated with classification tags of the classification 1 to 4 in the composition ratio data file 1211, and a determination model 121 is generated. Note that the classification 1 to the classification 4 in the figure shows that the cell group is cultured in each of the condition 1 to the condition 4.

### ((Determination))

As a cell group whose classification is unknown, a cell group is newly cultured in each of the first condition to the fourth condition, the cell group is subjected to an image recognition to generate a first data group of an unknown target, a clustering is performed with a cluster quantity 7 by generating a second data group D₂⁽²⁾ of the dimension number 2, and a composition ratio for each cluster is calculated.

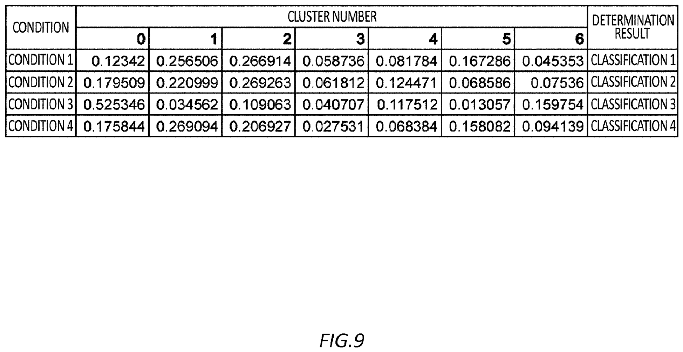

Fig. 9 illustrates the composition ratio for each cluster of a cell group generated under each condition. The composition ratio data of the condition 1 that is acquired is the closest to the composition ratio data of the classification 1 in the composition ratio data file 1211 of the determination model 121, and therefore, the cell group cultured in the condition 1 is determined correctly as the cell group of the classification 1. Similarly, the cell groups cultured in the conditions 2 to 4 are determined correctly as the cell groups of the classifications 2 to 4.

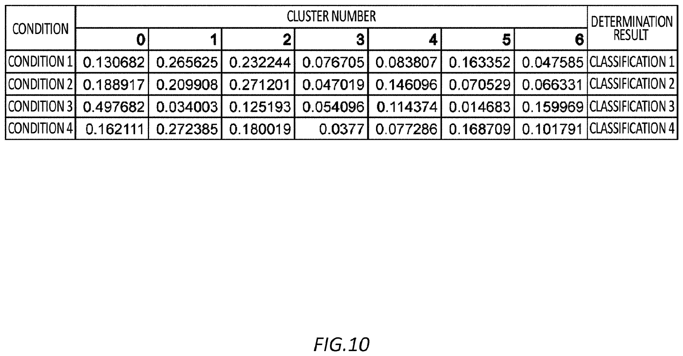

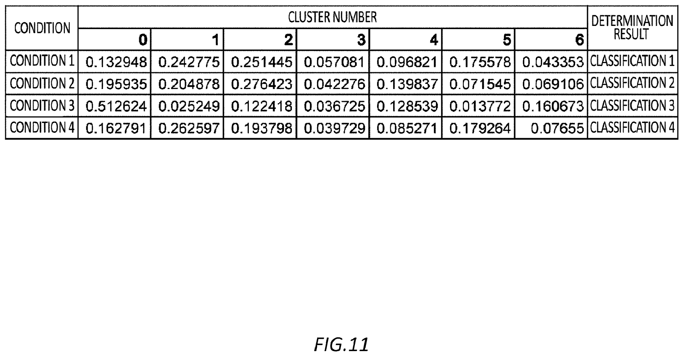

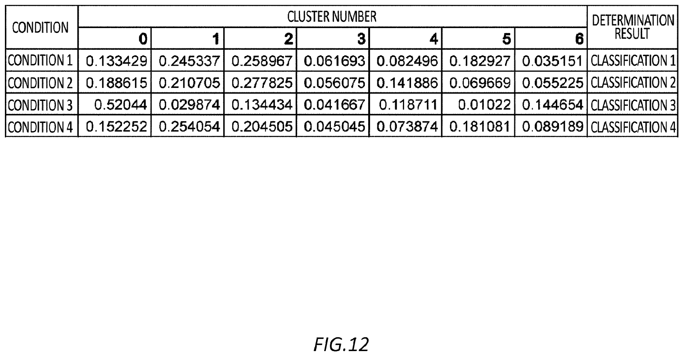

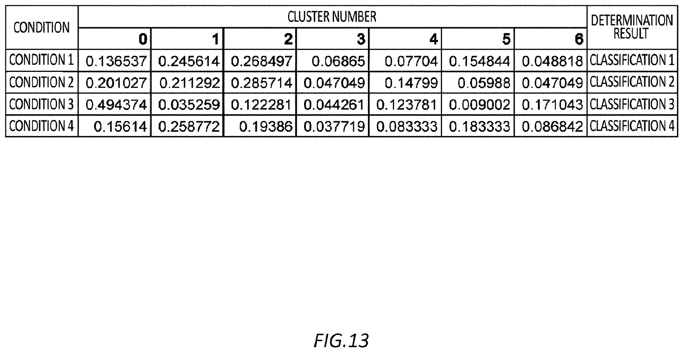

Hereinafter, a composition ratio for each cluster is calculated by further repeating a similar process four times, and newly culturing the cell group in each of the first condition to the fourth condition. Fig. 10 to Fig. 13 illustrate the composition ratio for each cluster of a cell group generated under each condition. The cell groups cultured in the conditions 1 to 4 were determined correctly as the cell groups of the classifications 1 to 4 also in these composition ratio data.

### (Texture of subject)

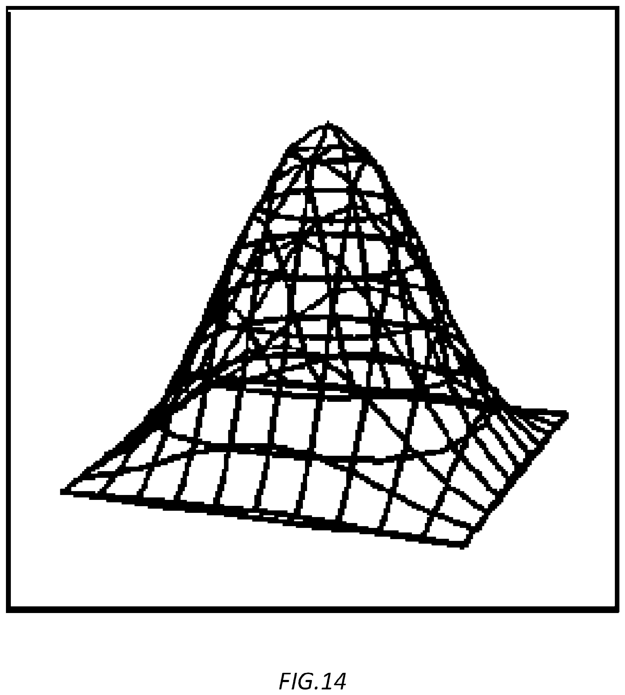

Fig. 14 illustrates a tip shape of a subject. Note that Fig. 14 to Fig. 19 illustrate an outline of a subject with a meshed pattern, the image-capturing direction is a vertical direction, and a plane that is perpendicular to the image-capturing direction is illustrated as a hollow square.

A tip shape may be a shape that protrudes to have a cone shape in the image-capturing direction. A texture of the tip shape (Peak) may be generated by the tip shape, or may vary in brightness as it moves away from the center point.

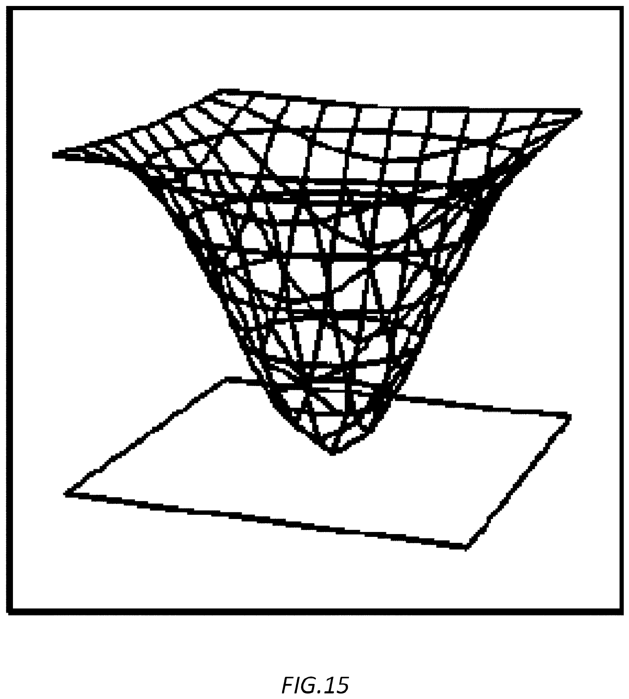

Fig. 15 illustrates a hole shape of a subject. A hole shape may be a recessed shape to be a cone shape in the image-capturing direction. A texture of the hole shape (Hole) may be generated by the hole shape, or may vary in brightness as it moves away from the center point.

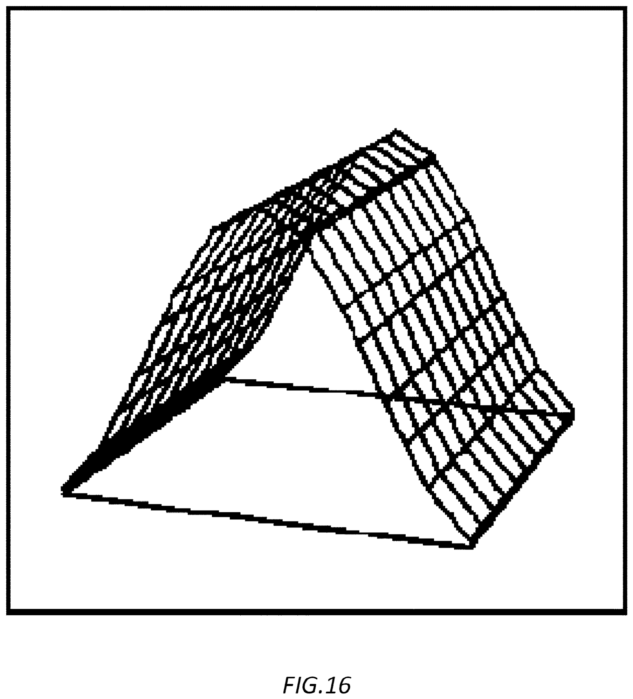

Fig. 16 illustrates a ridge shape of a subject. A ridge shape may be a shape that protrudes to have a roof-like shape in the image-capturing direction. A texture of the ridge shape (Ridge) may be generated by the ridge shape, and may vary in brightness as it moves away from the center line (that is, a ridge line, ridge).

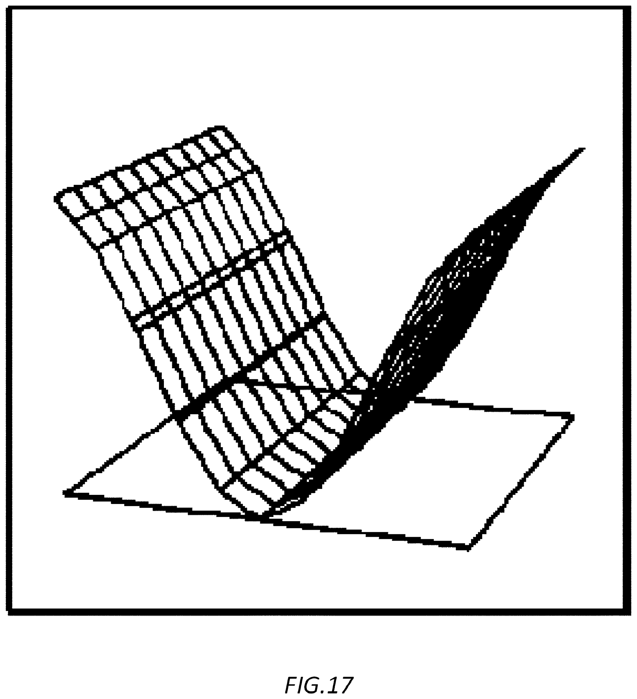

Fig. 17 illustrates a valley shape of a subject. A valley shape may be a recessed shape to be a valley shape in the image-capturing direction. A texture of the valley shape (Valley) may be generated by the valley shape, and may vary in brightness as it moves away from the center line (that is, a valley line).

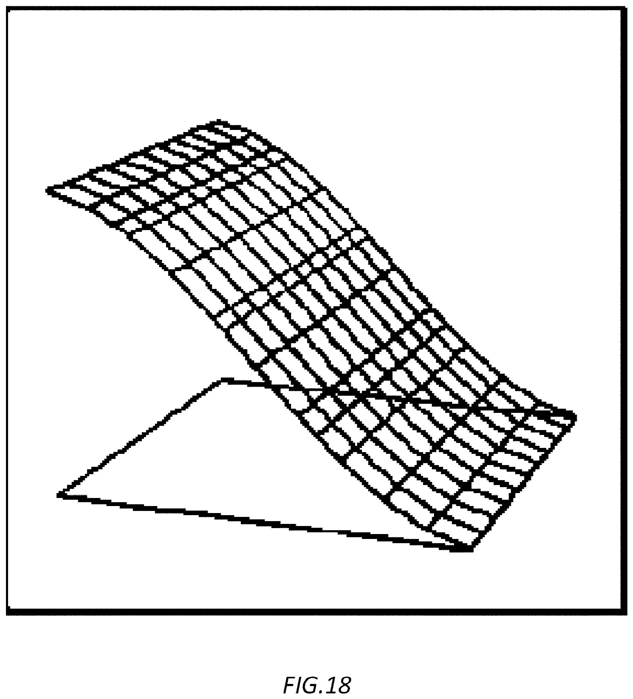

Fig. 18 illustrates an edge shape of a subject. The edge shape may be a shape of an end portion of a subject. A texture of the edge shape (Edge) may be generated by the edge shape, and may be a texture that varies in brightness toward an end part of the subject.

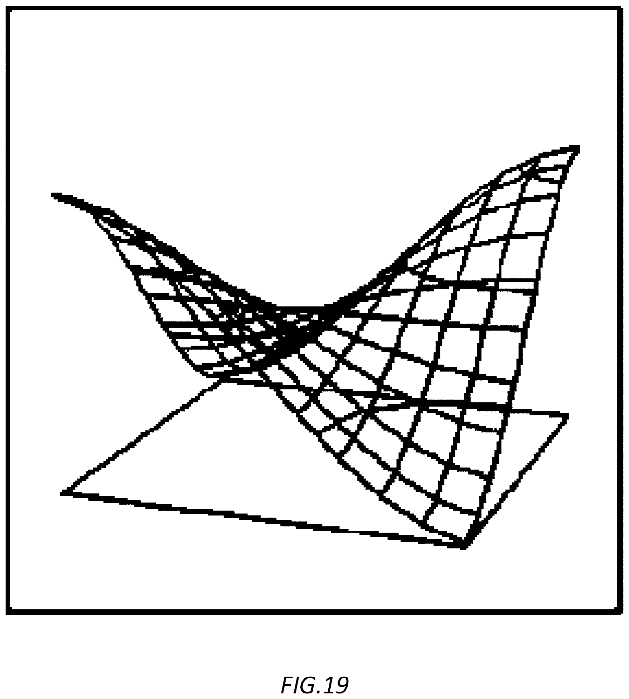

Fig. 19 illustrates a saddle shape of a subject. The saddle shape may be a shape that has a curvature in two directions like a saddle, among the recessed shapes in the image-capturing direction. In the figure, a curvature in a depth direction and a curvature of a left-right direction are different from each other. A texture of the saddle shape (Saddle) may be generated by the saddle shape and may be a texture that varies in brightness as it moves away from the center portion of the subject and is anisotropic in the change of the brightness.

### (Modified example)

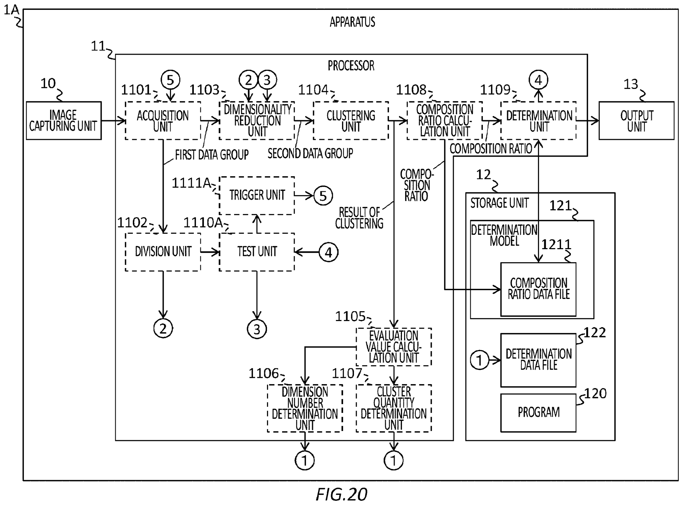

Fig. 20 illustrates an apparatus 1A according to a modified example. Note that in the apparatus 1A according to the modified example, a component that is substantially the same as that of the apparatus 1 shown in Fig. 1 is given the same reference numeral, and a description thereof is omitted.

The processor 11 of the apparatus 1A may realize the test unit 1110A and a trigger unit 1111A by executing a program 120.

The test unit 1110A may perform a test of the determination model 121 in a similar manner to the test unit 1110 in the above embodiment. Additionally, the test unit 1110A according to the modified example performs test about the dimension number p and the cluster quantity q determined by the dimension number determination unit 1106 and the cluster quantity determination unit 1107. The test unit 1110A may perform a test of the dimension number p and the cluster quantity q based on a difference degree between a composition ratio for each cluster calculated for a target indicated with a data group for generation and a composition ratio for each cluster calculated for a target indicated with a data group for testing. The test unit 1110A may perform a test by using a composition ratio calculated in a case in which the dimension number p and the cluster quantity q are applied, that is, in a case in which a dimensionality reduction of the dimension number p and a clustering of the cluster quantity q are performed. The test unit 1110A may perform a test by using a composition ratio of the data group for generation and the data group for testing that are generated from the same first data group. The test unit 1110A may read, from the composition ratio data file 1211, a composition ratio for each cluster for the data group for generation. The test unit 1110A may supply, to the dimensionality reduction unit 1103, a data group for testing as the first data group of the unknown target, and acquire a composition ratio of the data group for testing, by causing a dimensionality reduction on a dimension number p by the dimensionality reduction unit 1103, clustering with a cluster quantity q by the clustering unit 1104, and calculation of a composition ratio for each cluster by the composition ratio calculation unit 1108 to be performed.

The test unit 1110A may calculate, as a difference degree, a distance (Euclidean distance, as an example) between composition ratio data indicating the composition ratio of the data group for generation and composition ratio data indicating the composition ratio of the data group for testing. The test unit 1110A may consider the dimension number p and the cluster quantity q as failed corresponding to the difference degree being greater than a reference value, and consider the dimension number p and the cluster quantity q as passed corresponding to the difference degree being less than or equal to the reference value. The test unit 1110A may supply, to the trigger unit 1111A, a result of the test about the dimension number p and the cluster quantity q.

The trigger unit 1111A triggers the regenerating of the determination model 121 based on the pass or failure of the test obtained by the test unit 1110 in a similar manner to the trigger unit 1111A in the above embodiment. Additionally, the trigger unit 1111A according to the modified example triggers redetermining of the dimension number p and the cluster quantity q, when the dimension number p and the cluster quantity q are applied, based on a difference degree between a composition ratio for each cluster calculated for a target indicated with the data group for generation by the composition ratio calculation unit 1108 and a composition ratio for each cluster calculated for a target indicated with the data group for testing. The trigger unit 1111A may trigger redetermining of the dimension number p and the cluster quantity q based on a result of the test for the dimension number p and the cluster quantity q that is performed by the test unit 1110A. In this embodiment, as an example, in response to a failure of the result of the test, the trigger unit 1111A may cause the acquisition unit 1101, the dimensionality reduction unit 1103, the clustering unit 1104, the evaluation value calculation unit 1105, the dimension number determination unit 1106, and the cluster quantity determination unit 1107 to perform a process again that determines the dimension number p and the cluster quantity q.

According to the apparatus 1A described above, redetermining of the determined dimension number p and the cluster quantity q is triggered, when the dimension number p and the cluster quantity q are applied, based on a difference degree between a composition ratio calculated for a target indicated with the data group for generation and a composition ratio calculated for a target indicated with the data group for testing. Therefore, when the difference degree of a composition ratio between a data group for generation and a data group for testing divided from same first data group is greater than a reference, the dimension number p and the cluster quantity q can be determined again.

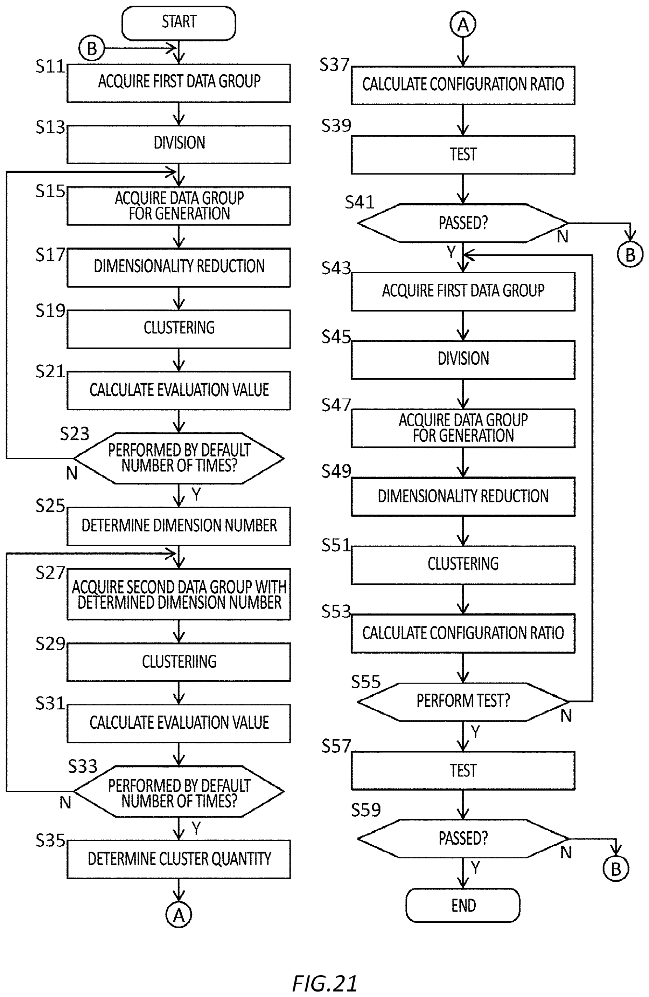

Fig. 21 illustrates an operation of the apparatus 1A. The apparatus 1A generates the determination model 121 by performing processes of steps S11 to S59. Note that in the operation of the apparatus 1A according to the modified example, an operation that is substantially the same as one shown in Fig. 3 is given the same reference numeral, and a description thereof is omitted.

In the operation of the apparatus 1A according to the modified example, after calculating the composition ratio of the data group for generation by the process of step S 37 described above, in step S 39, the test unit 1110A performs a test for the dimension number p and the cluster quantity q. The test unit 1110A may supply, to the dimensionality reduction unit 1103, a data group for testing as the first data group of the unknown target, and acquire a composition ratio of the data group for testing, by causing a dimensionality reduction on a dimension number p by the dimensionality reduction unit 1103, clustering with a cluster quantity q by the clustering unit 1104, and calculation of a composition ratio for each cluster by the composition ratio calculation unit 1108 to be performed. The test unit 1110A may acquire the composition ratio stored in the composition ratio data file 1211 in step S 37 as the composition ratio of the data group for generation. The test unit 1110A may perform a test by calculating the distance between the composition ratio data of the data group for generation and the composition ratio data of the data group for testing as the difference degree, and comparing the result with a reference value.

In step S41, the trigger unit 1111 determines whether or not the test of the dimension number p and the cluster quantity q was passed. When the test was passed (step S41; Yes), the process may transfer to step S43. When the test was failed (step S41; No), the trigger unit 1111 may transfer the process to step S11 described above. In this manner, the redetermining of the dimension number p and the cluster quantity q is triggered. Note that in the process of step S11 performed again, a first data group different from the process of step S11 last time may be acquired. When the process of step S11 is performed again, the composition ratio data stored in the composition ratio data file 1211 may be deleted.

### (Another modified example)

Note that in the above-described embodiment and the modified example, the acquisition unit 1101 is described to acquire a data group by performing an image analysis, but the acquisition unit 1101 may acquire a data group generated in an external apparatus. In this case, a value of the feature quantity may not be a value of the subject, or may be a measurement value obtained by a measurement apparatus.

In addition, the composition ratio data file 1211 of the determination model 121 is described to store the composition ratio calculated by the composition ratio calculation unit 1108 the target indicated with each of the plurality of first data groups of the known target, but the composition ratio data file 1211 may store a composition ratio calculated by a composition ratio calculation unit 1108 for a target indicated with a single first data group of the known target. In this case, when the first data group of the unknown target is acquired by the acquisition unit 1101 in a state in which the composition ratio is stored, the determination unit 1109 may determine the difference between a target indicated with a first data group of the unknown target and a target indicated with a first data group of the known target, based on an approximation degree between a composition ratio for each cluster calculated by the composition ratio calculation unit 1108 for the target indicated with the first data group of the unknown target and a composition ratio for each cluster for the first data group of the known target. The determination unit 1109 may determine, when the distance between the composition ratio data (Euclidean distance, as an example) is less than a reference value, that the target indicated with the first data group of the unknown target and the target indicated with the first data group of the known target are the same. The determination unit 1109 may determine, when the distance between the composition ratio data is greater than or equal to a reference value, that the target indicated with the first data group of the unknown target and the target indicated with the first data group of the known target are different from each other. In this manner, the difference between the target indicated with the first data group of the known target and the target indicated with the first data group of the unknown target can be determined.

In addition, the output unit 13 is described to output a determination result (a classification ID of the target indicated with the first data group of the unknown target, as an example) obtained by the determination unit 1109, but in addition to or instead of this, another information may be output. For example, when information of the target indicated with the first data group is stored, in storage unit 12, in association with each of the plurality of first data groups of the known target, the output unit 13 may output information of a target determined to correspond to a target indicated with the first data group of the unknown target, from the target indicated with each of the plurality of first data groups of the known target. In this manner, information about the target determined to correspond can be output. The target information may be stored being associated with a classification tag of the first data group in the storage unit 12, and in this case, the output unit 13 may output information associated with a classification tag of a classification ID supplied from the determination unit 1109. The target information may be the first data group of the known target itself, may be an average value or distribution of each feature quantity indicated with the first data group, or may be an analysis result for the target. The analysis for the target may include at least one of the destruction or the staining of the target. As an example, when the target is a cell group, the analysis may be performed using at least one technique of flow cytometry (FCM), quantitative PCR (qPCR), RNA-seq, immunostaining, mass spectrometry, ELISA (Enzyme-Linked Immunosorbent Assay), or a response analysis for medication. A result of analysis using a flow cytometry may include an immune phenotype of a stem cell or a differentiated cell, or may include an indicator of a cell cycle or apoptosis. A result of analysis using quantitative PCR or RNA-seq may include the degree of gene expression or its change over time (also referred to as a profile). A result of analysis using immunostaining may include the expression pattern or colocalization of a particular protein (as an example, OCT4, NANOG, Sox2, CD34, CD45). A result of mass spectrometry may include an identification result or a quantification result of a molecule of a protein, peptide, metabolite, and further, lipid or the like, which is intracellular or extracellular (a culture solution or a carrier). A result of ELISA may include a molecule such as a particular protein, hormone, cytokine, or the like that is intracellular or extracellular (a culture solution or a carrier) or a variation of a molecule group involved in an intracellular signal transduction. A result of analysis using a medication may include a change of situation such as engraftment or growth of a result obtained by administering an agent to a cell, differentiation, cell death, inflammation response, immune response, or the like. When the target indicated with the first data group is a cell group or a microorganism group, an analysis performed for the target may be a metabolome analysis or a proteome analysis.

In addition, the test unit 1110, 1110A are described to perform the test of the determination model 121 in the generating step of the determination model 121, but the test of the determination model 121 may also be performed according to a user operation in the operation step of the determination model 121. In the operation step of the determination model 121, the test unit 1110, 1110A may acquire a determination result obtained by the determination unit 1109 for the target indicated with the first data group acquired by the acquisition unit 1101 and a result of a correct answer input from a user, and calculate at least one of precision recall, F1 score, accuracy, or a macro average or a weighting average thereof, to determine pass or failure of the determination model 121. The trigger unit 1111, 1111A may cause generating of the determination model 121 again when the test of the determination model 121 is failed.

In addition, the processor 11 of the apparatus 1, 1A are described to realize the division unit 1102, the clustering unit 1104, the evaluation value calculation unit 1105, the cluster quantity determination unit 1107, the composition ratio calculation unit 1108, the determination unit 1109, and the test unit 1110, but may not realize any of them. When the processor 11 does not realize the division unit 1102 and the test unit 1110, the apparatus 1, 1A may not perform the test of the determination model 121 or the test of the dimension number p and the cluster quantity q, and may the dimensionality reduction unit **1103** perform a dimensionality reduction for an entire first data group. When the processor 11 does not realize the clustering unit 1104, the apparatus 1, 1A may cause an external apparatus to perform clustering by outputting a data group, and acquire a result of the clustering. When the processor 11 does not realize the evaluation value calculation unit 1105, the apparatus 1, 1A may cause the external apparatus to evaluate the result by outputting the result of the clustering, to acquire an evaluation value. When the processor 11 does not realize the cluster quantity determination unit 1107, the apparatus 1, 1A may perform clustering with a cluster quantity specified by the user operation or the like. When the processor 11 does not realize the composition ratio calculation unit **1108,** the apparatus **1,** 1A may cause the external apparatus to calculate a composition ratio by outputting the result of the clustering, to acquire the calculated composition ratio. When the processor 11 does not realize the determination unit 1109, the apparatus 1, 1A may output a composition ratio for each cluster to the external apparatus and cause the external apparatus to perform determination.

In addition, the apparatus 1, 1A are described to comprise the image capturing unit 10, the storage unit 12, and the output unit 13, but may not have any of them. When the apparatus 1, 1A do not comprise the image capturing unit 10, the acquisition unit 1101 may acquire an image from an external image-capturing apparatus. When the apparatus 1, 1A do not comprise the storage unit 12, the external storage device may store the program 120, the determination model 121, the determination data file 122, or the like. When the apparatus 1, 1A do not comprise the output unit 13, the determination result obtained by the determination unit 1109 may be stored in the storage unit 12.

In addition, a cell or a microorganism as a subject is described to be distributed in a plane or a space, but may form a collection of tissue or the like in a sheet-like shape or a lump shape. In addition, the subject is described to be a cell or a microorganism, but the subject type is not limited thereto. For example, the subject may be a food, tablet, seed, an electronic component, or the like, or may be captured in a collected state.

Various embodiments of the present invention may be described with reference to flowcharts and block diagrams, where blocks may represent (1) stages of processes in which operations are executed or (2) sections of apparatuses responsible for executing operations. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory, or RAM, a read-only memory, or ROM, an erasable programmable read-only memory, or EPROM or flash memory, an electrically erasable programmable read-only memory, or EEPROM, a static random access memory, or SRAM, a compact disc read-only memory, or CD-ROM, a digital versatile disk, or DVD, a Blu-ray (registered trademark) disk, a memory stick, an integrated circuit card, or the like.

The computer-readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Smalltalk (registered trademark), JAVA (registered trademark), C++, or the like, and a conventional procedural programming language such as a "C" programming language or a similar programming language.

The computer-readable instruction may be provided for a processor or programmable circuit of a programmable data processing apparatus, such as a computer, locally or via a local area network (LAN), a wide area network (WAN) such as the Internet, or the like to execute the computer-readable instruction in order to create means for executing the operations specified in the flowcharts or block diagrams. Here, the computer may be a personal computer, or PC, a tablet computer, a smartphone, a workstation, a server computer, a general purpose computer, a special purpose computer, or the like, or may be a computer system to which a plurality of computers are connected. Such computer system to which the plurality of computers are connected is also referred to as a distributed computing system, and is a computer in a broad sense. In a distributed computing system, a plurality of computers collectively execute a program by each of the plurality of computers executing a portion of the program, and passing data during the execution of the program among the computers as needed.

Examples of the processor include a computer processor, a central processing unit (CPU), a processing unit, a microprocessor, a digital signal processor, a controller, a microcontroller, and the like. The computer may include one processor or a plurality of processors. In a multi-processor system including a plurality of processors, the plurality of processors collectively execute a program by each of the processors executing a portion of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. Moreover, which portion of the program each of the plurality of processor is responsible for executing may be determined statically by multiprocessor-aware programming.

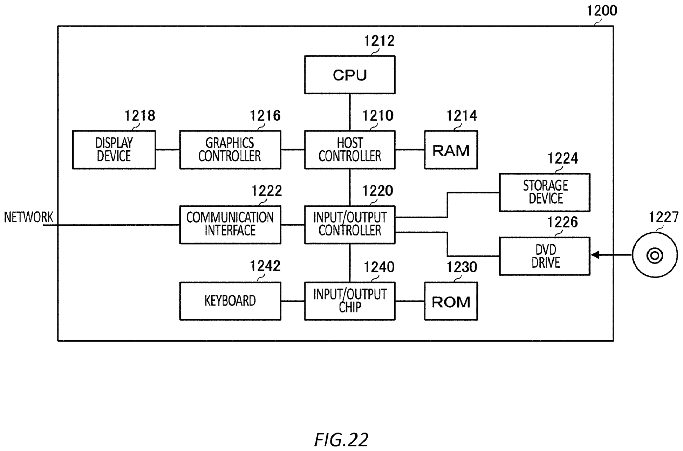

Fig. 22 illustrates an example of a computer 1200 in which a plurality of aspects of the present invention may be entirely or partially embodied. A program that is installed in the computer 1200 may cause the computer 1200 to function as operations associated with a device according to the embodiment of the present invention or one or more sections in the device, or may cause the computer 1200 to execute the operation or the one or more sections, and/or may cause the computer 1200 to execute processes according to the embodiment of the present invention or stages of the processes. Such a program may be executed by a CPU 1212 in order to cause the computer 1200 to execute particular operations associated with some or all of the blocks of flowcharts and block diagrams described herein.

The computer 1200 according to the present embodiment includes a CPU 1212, a RAM 1214, a graphics controller 1216, and a display device 1218, which are mutually connected by a host controller 1210. The computer 1200 also includes a communication interface 1222, a storage device 1224 such as a hard disk, input/output units such as a DVD-ROM drive 1226 and an IC card drive, which are connected to the host controller 1210 via an input/output controller 1220. The computer also includes legacy input/output units such as an ROM 1230 and a keyboard 1242, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 on a frame buffer or the like provided in the RAM 1214 or in itself, and causes the image data to be displayed on a display device 1218.

The communication interface 1222 communicates with other electronic devices via a network. The storage device 1224 stores a program and data used by the CPU 1212 in the computer 1200. The DVD-ROM drive 1226 reads the programs or the data from the DVD-ROM 1227, and provides the programs or the data to the storage device 1224 via the RAM 1214. The IC card drive reads the programs and the data from the IC card, and/or writes the programs and the data to the IC card.

The ROM 1230 stores therein a boot program or the like that is executed by the computer 1200 at the time of activation, and/or a program which depends on the hardware of the computer 1200. The input/output chip 1240 may also connect various input/output units to the input/output controller 1220 via a parallel port, a serial port, a keyboard port, a mouse port, or the like.

Programs are provided by a computer-readable medium such as the DVD-ROM 1227 or the IC card. The programs are read from the computer-readable medium, are installed in the storage device 1224, the RAM 1214, or the ROM 1230, which are also an example of the computer-readable medium, and are executed by the CPU 1212. Information processing written in these programs is read by the computer 1200, and provides cooperation between the programs and the various types of hardware resources described above. A device or method may be constructed by realizing the operation or processing of information according to the use of the computer 1200.

For example, when communication is executed between the computer 1200 and an external device, the CPU 1212 may execute a communication program loaded onto the RAM 1214 to instruct communication processing to the communication interface 1222, based on the processing described in the communication program. The communication interface 1222, under the control of the CPU 1212, reads transmission data stored in a transmission buffer processing region provided in a recording medium such as the RAM 1214, the storage device 1224, the DVD-ROM 1227, or the IC card, transmits the read transmission data to the network, or writes reception data received from the network to a reception buffer processing region or the like provided on the recording medium.

In addition, CPU 1212 may cause all or a required part of a file or database stored in an external recording medium such as storage device 1224, DVD-ROM drive 1226 (DVD-ROM 1227), and an IC card to be read by RAM 1214, to perform various types of processes for the data on RAM 1214. The CPU 1212 may then write back the processed data to the external recording medium.

Various types of information such as various types of programs, data, tables, and databases may be stored in a recording medium and subjected to information processing. The CPU 1212 may execute various types of processing on the data read from the RAM 1214, which includes various types of operations, information processing, conditional judging, conditional branch, unconditional branch, search/replace of information, or the like, as described throughout this disclosure and designated by an instruction sequence of programs, and writes the result back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may retrieve, out of the plurality of entries, an entry with the attribute value of the first attribute specified that meets a condition, read the attribute value of the second attribute stored in said entry, and thereby acquiring the attribute value of the second attribute associated with the first attribute satisfying a predetermined condition.

The above-described program or software module may be stored in the computer-readable medium on the computer 1200 or near the computer 1200. In addition, a recording medium such as a hard disk or a RAM provided in a server system connected to a dedicated communication network or the Internet may be used as the computer-readable medium, thereby providing the program to the computer 1200 via the network.

While the present invention has been described above by way of the embodiments, the technical scope of the present invention is not limited to the scope described in the above-described embodiments. It is apparent to persons skilled in the art that various changes or improvements can be made to the above-described embodiments. It is also apparent from description of the claims that the embodiments to which such modifications or improvements are made may be included in the technical scope of the present invention.

It should be noted that each process of the operations, procedures, steps, steps, and the like performed by the apparatus, system, program, and method shown in the claims, specification, or drawings can be executed in any order as long as the order is not indicated by "prior to", "before", or the like and as long as the output from a previous process is not used in a later process. Even if the operation flow is described using phrases such as "first" or "next" for the sake of convenience in the claims, specification, or drawings, it does not necessarily mean that the process must be performed in this order.

### EXPLANATION OF REFERENCES

1, 1A: apparatus
10: image capturing unit
11: processor
12: storage unit
13: output unit
120: program
121: determination model
122: determination data file
1101: acquisition unit
1102: division unit
1103: dimensionality reduction unit
1104: clustering unit
1105: evaluation value calculation unit
1106: dimension number determination unit
1107: cluster quantity determination unit
1108: composition ratio calculation unit
1109: determination unit
1110, 1110: test unit
1111A: trigger unit
1200: computer
1210: host controller
1211: composition ratio data file
1212: CPU
1214: RAM
1216: graphics controller
1218: display device
1220: input/output controller
1222: communication interface
1224: storage device
1226: DVD-ROM drive
1227: DVD-ROM
1230: ROM
1240: input/output chip
1242: keyboard.

## Claims

1. An apparatus comprising:
a processor, wherein the processor performs:
an acquisition process by acquiring a first data group including a plurality of first feature vectors;
a dimensionality reduction process of generating a plurality of second data groups each including a plurality of second feature vectors obtained by performing a dimensionality reduction on at least a part of the plurality of first feature vectors, the plurality of second data groups differing in a number of dimensions reduced;
a first calculation process by calculating an evaluation value resulting from performing clustering on each of the plurality of second data groups; and
a first determination process by determining a dimension number after a dimensionality reduction that should be applied to a first feature vector based on an evaluation value calculated for each of the plurality of second data groups.

2. The apparatus according to claim 1, wherein the processor further performs:
a clustering process by performing a plurality of clusterings, with different cluster quantities to be generated, for a second data group including a second feature vector with a dimension number determined by the first determination process among the plurality of second data groups;
a second calculation process by calculating each of evaluation values that is an execution result obtained by performing the plurality of clusterings; and
a second determination process by determining a cluster quantity of clustering that should be applied to a second data group based on an evaluation value calculated for each of the plurality of clusterings.

3. The apparatus according to claim 2, wherein the processor further performs a third calculation process by calculating a composition ratio of a number of elements for each cluster for the first data group from a result of clustering with a cluster quantity determined in the second determination process.

4. The apparatus according to claim 3, wherein the processor further performs:
a division process by dividing the plurality of first feature vectors into a part of a first feature vector as at least a part of the first feature vectors and another part of the first feature vectors; and
a trigger process by triggering, when applying a dimension number and a cluster quantity determined by the first determination process and the second determination process, redetermining of the dimension number and the cluster quantity that should be applied based on a difference degree between a composition ratio for each cluster calculated by the third calculation process for a target indicated with the part of the first feature vectors and a composition ratio for each cluster calculated by the third calculation process for a target indicated with the another part of the first feature vectors.

5. The apparatus according to claim 3 or 4, further comprising a storage unit that stores a composition ratio for each cluster calculated by the third calculation process for a target indicated with the first data group, wherein the apparatus:
when another first data group is acquired by the acquisition process in a state in which a composition ratio for each cluster is stored in the storage unit,
in the dimensionality reduction process, generate, from the another first data group, another second data group including a second feature vector of the dimension number determined by the first determination process; and
in the clustering process, perform clustering of the cluster quantity determined by the second determination process for the another second data group, and wherein
the processor further performs a determination process by determining a difference between a target indicated with the another first data group and a target indicated with the first data group, based on an approximation degree between a composition ratio for each cluster calculated by the third calculation process for a target indicated with the another first data group and a composition ratio for each cluster for the first data group.

6. The apparatus according to claim 3 or **4,** further comprising a storage unit that stores a composition ratio for each cluster calculated by the third calculation process for a target indicated with each of a plurality of first data groups, wherein the apparatus:
when another first data group is acquired by the acquisition process in a state in which a composition ratio for each cluster is stored in the storage unit,
in the dimensionality reduction process, generate, from the another first data group, another second data group including a second feature vector of the dimension number determined by the first determination process; and
in the clustering process, perform clustering of the cluster quantity determined by the second determination process for the another second data group, and wherein
the processor further perform a determination process by determining whether a target indicated with the another first data group corresponds to which of targets indicated with respective ones of the plurality of first data groups, based on a composition ratio for each cluster calculated by the third calculation process for the target indicated with the another first data group and a composition ratio for each of the plurality of first data groups.

7. The apparatus according to claim 6, wherein the storage unit further stores information of a target indicated with the first data group in association with each of the plurality of first data groups; wherein
the processor further performs an output process by outputting information of the target determined by the determination process to be applicable for a target indicated with the another first data group among targets indicated with respective ones of the plurality of first data groups.

8. The apparatus according to any one of claim 1 to 7, wherein a subject is a cell or a microorganism.

9. A method comprising:
performing an acquisition step by acquiring a first data group including a plurality of first feature vectors;
performing a dimensionality reduction step of generating a plurality of second data groups each including a plurality of second feature vectors obtained by performing a dimensionality reduction on at least a part of the plurality of first feature vectors, the plurality of second data groups differing in a number of dimensions reduced;
performing a first calculation step by calculating an evaluation value resulting from performing clustering on each of the plurality of second data groups; and
performing a first determination step by determining a dimension number after a dimensionality reduction that should be applied to a first feature vector based on an evaluation value calculated for each of the plurality of second data groups.

10. A program that is executed by a computer to cause the computer to perform:
an acquisition process by acquiring a first data group including a plurality of first feature vectors;
a dimensionality reduction process of generating a plurality of second data groups each including a plurality of second feature vectors obtained by performing a dimensionality reduction on at least a part of the plurality of first feature vectors, the plurality of second data groups differing in a number of dimensions reduced;
a first calculation process by calculating an evaluation value resulting from performing clustering on each of the plurality of second data groups; and
a first determination process by determining a dimension number after a dimensionality reduction that should be applied to a first feature vector based on an evaluation value calculated for each of the plurality of second data groups.
